# EUROPEAN PATENT SPECIFICATION

(11) **EP 3 790 849 B1**
(45) Date of publication and mention of the grant of the patent: **26.11.2025**
(21) Application number: 19724754.7
(22) Date of filing: 07.05.2019
(51) Int. Cl.: C04B 28/04, C04B 20/02, C04B 20/10

(54) **CEMENT-BASED COMPOSITE MATERIALS COMPRISING SP2 HYBRIDIZED CARBON ALLOTROPES**
ZEMENTBASIERTE VERBUNDMATERIALIEN AUF MIT SP2-HYBRIDISIERTEN KOHLENSTOFFALLOTROPEN
MATÉRIAUX COMPOSITES À BASE DE CIMENT COMPRENANT DES ALLOTROPES DE CARBONE HYBRIDÉS SP2

(30) Priority: 08.05.2018 IT 201800005161
(43) Date of publication of application: 17.03.2021
(73) Proprietor: Politecnico di Milano, 20133 Milano (IT)
(72) Inventor: GALIMBERTI, Maurizio Stefano, 20123 MILANO (IT); BARBERA, Vincenzina, 20123 MILANO (IT); REDAELLI, Elena, 20123 MILANO (IT)
(74) Representative: Merli, Silvia
(86) International application number: PCT/EP2019/061705
(87) International publication number: WO 2019/215169

(56) References cited:
- WO-A1-2016/050887
- CN-A- 106 277 876
- KR-A- 20050 081 314

## Description

### FIELD OF THE INVENTION

The present invention relates to cement-based composite materials comprising sp² hybridized carbon allotropes.

In particular the present invention relates to composite materials comprising adducts between sp² hybridized carbon allotropes and pyrrole derivatives, or fiber coated with said adducts.

The present invention further relates to process to obtain said composite materials.

### BACKGROUND OF THE INVENTION

Cement is the most widely used construction material in the world.

This is due to the low cost, high availability, ability to harden at room temperature and well-documented properties enabling the design of buildings (Carbon 43 (2005) 1239-1245; Construction and Building Materials 46 (2013) 8-12).

Cement is a substance that acts as a binder, adhering to other materials and binding them together. Cement is mixed with sand (fine aggregates) to form mortar; with sand and gravel, or with aggregates of different sizes, to form concrete. When coupled with a reinforcement consisting of steel rods, suitably arranged, the concrete becomes reinforced concrete.

The cement may be non-hydraulic or hydraulic. Non-hydraulic cement adheres and is fixed with the other ingredients in a dry environment, and is essentially composed of calcium hydroxide. Hydraulic cement (known as Portland cement) adheres and fixes via reactions between its ingredients and water, and consists of calcium silicates.

Cement-based materials have a relatively high compressive strength, but are also characterised by low flexural strength, low tensile strength and low toughness (Construction and Building Materials 46 (2013) 8-12; Construction and Building Materials 70 (2014) 332-338).

These characteristics cause brittleness, which is the main reason for fractures in concrete, as well as low tensile strength and elongation (Construction and Building Materials 73 (2014) 113-124; Construction and Building Materials 70 (2014) 332-338; Construction and Building Materials 76 (2015) 16-23).

To mitigate the brittleness problem of cement-based materials, and therefore of the concrete fracture, reinforcing fibers are used (Cem. Concr. Composite 1997; 19(2), 107-22). The fibers mixed in cementitious materials can be steel or polyvinyl alcohol fibers, or polypropylene and nylon, cellulose, glass and coal fibers. These fibers have good fracture resistance and therefore improve the fracture resistance of concrete, increasing its toughness and breaking load. In particular, the fibers hinder the propagation of the fracture when the fracture reaches the macro-scale. However, these fibers have little effect in preventing the formation of a micro-fracture.

Among others, carbon fibers, and graphite-like structured carbon atoms polymers with a diameter of between 5 and 15 µm, were used. Cement-based composites comprising short carbon fibers have good tensile and flexural properties, high electrical conductivity and low thermal conductivity, high corrosion resistance (Composites Part B: Engineering, Vol. 31, Issues 6-7, 2000, 511-526). In addition, thanks to their high electrical conductivity values, they can act as sensors for deformation, damage and temperature (Cement and Concrete Composites, Volume 26, Issue 4, May 2004, 291-297; Cement and Concrete Research, Volume 31, Issue 4, 2001, 665-667; Smart Materials and Structures, 2(1), 1993).

So-called conventional carbon fibers and carbon filaments can be used in cement matrices to improve both the mechanical and electrical properties of the material, as well as the electromechanical and electromagnetic behaviour (Carbon 43 (2005) 1239-1245).

Over the years, carbon filaments have become some of the most commonly used fillers to improve the mechanical and electrical properties of cement materials (Construction and Building Materials 46 (2013) 8-12). Among carbon filaments, carbon nanotubes (CNT) have been used in particular.

Carbon nanotubes are nano-filaments or nano-fibers composed of sp² hybridized carbon atoms, with a tubular cylindrical shape, open or closed at the ends, consisting of one or more concentric graphene cylinders. They have diameters of the order of nanometres and lengths that can reach millimetres.

A key feature of a fiber and of a filament is the high value of the so-called aspect ratio. The expression aspect ratio indicates the ratio between the longest and shortest dimension of a two-dimensional figure. For example, the aspect ratio of a rectangle is the ratio of the longest side to the shortest side, i.e., the ratio of width to height when the rectangle is in the landscape arrangement. However, the definition of aspect ratio can also be extended to three-dimensional geometric figures by choosing two characteristic dimensions of the solid figure. Therefore, the aspect ratio of a fiber can be defined as the ratio between its length and the diameter of the section, assuming a circular section, or the smallest dimension of the section. Carbon nanotubes have a high aspect ratio and, consequently, a high surface area.

The use of carbon nanotubes is due to their properties, which are superior to those of traditional fibers, such as the specific surface area, resistance, toughness, Young's modulus (about 1 TPa), elongation at break (about 280%), and the breaking load (11-63 GPa, about 100 times that of steel). Carbon nanotubes also possess excellent mechanical and thermal properties and are therefore ideal reinforcing materials (Construction and Building Materials 76, 2015, 16-23; Science 1997, 277.1971-5; Science 2000, 287, 637-40).

Cement pastes comprising CNTs show a higher Young's modulus and flexural strength increasing as a function of the concentration of nanotubes, which therefore offer better performances than those of carbon fibers (Construction and Building Materials 50, 2014, 116-129). Moreover, these composite materials have lower porosity, as well as a lower total pore volume, and a denser microstructure and smaller shrinkage. In the literature there are contrasting data with respect to the compression load of CNT comprising cement-based materials: some studies have shown that multi-walled nanotubes impart a much higher compression load than single-walled nanotubes (Campillo I, Dolado JS, Porro A., Proceeding of 1st international symposium on nanotechnology in construction, Cambridge (England) 2004; Technol Ski Compos 2009, 69, 1985-90; Mater Sci Eng A 2010, 527, 1063-7), while others report that the addition of multi-walled nanotubes improves the toughness without however a significant increase in the compression load (Construction and Building Materials 70 (2014) 332-338). Furthermore, the addition of multi-walled CNTs in cement pastes has been shown to prevent the formation of micro-cracks (Makar JM, Beaudoin JJ., 1st International symposium on nanotechnology in construction. Paisley (Scotland); 2004. p. 331-42). Finally, several studies have highlighted the increase in the bending load typical of CNT comprising cement-based materials (Construction and Building Materials 46 (2013) 8-12; Cem Concr Compos 2010.32, 110-115; Adv Cem Res 2008, 20 , 2, 65-73).

The above results demonstrate the potential of carbon nanotubes in cement pastes, but they also present a non-univocal picture: on the whole the effect of nanotubes on the pore structure and on the microstructure of a cement matrix is unclear and the studies on breaking properties of CNT comprising cement-based materials are still insufficient (Construction and Building Materials 70 (2014) 332-338).

One of the fundamental reasons behind the poor reproducibility of the data resulting from analyses carried out on CNT comprising cement-based materials is represented by the interfacial bond between the carbon nanotubes and the cement matrix, that is to say the poor compatibility of the carbon allotropes and the matrix (Carbon 43, 2005, 1239- 1245; Construction and Building Materials 70, 2014, 332-338). Due to the strong Van der Waals interactions that exist between objects of nanoscopic scale, nanomaterials have a strong tendency to agglomerate, therefore the main obstacle to overcome in preparing a cement-based composite comprising carbon nano-fillers is the difficulty in obtaining homogeneous mixtures (Construction and Building Materials 73 (2014) 113-124; Materials 2016, 9, 1015; Compositions Part B 2004, 35, 185-189). The high surface area due to the nanometer size can also lead to the absorption of water on the surface of the nano-filler causing a deterioration of the workability of the cement mixture, with consequent further difficult dispersion of the nano-filler.

The research therefore has been focused on the development of methods to obtain an efficient dispersion of carbon nanotubes in cement pastes.

So-called physical methods, which involve the use of surfactants, are well known in the art (Construction and Building Materials 73, 2014, 113-124). The most widely used surfactants are for example polyacrylic acid, calcium naphthalene sulfonate, lignosulfonate, propylene glycol ethers, also with ethoxylated alkylphenol groups and polycarboxylates. However, these compounds can give rise to incompatibility with the hydration phase of cement-based materials, for example by delaying or even preventing it, they can trap air in the cement paste, and can give rise to reactions with the mixtures. The use of sodium dodecyl sulfate leads to a drastic reduction of the mechanical properties of the hardened cement material, due to the increase in porosity caused by the formation of foam, while that of non-ionic polyoxyethylene lauryl ether has not shown an increase in compression load (Construction and Building Materials 50, 2014, 116-129).

Various processes to chemically modify the surface of carbon nanotubes are also known in the art. Acid treatment, with sulfuric acid and nitric acid, or with only nitric acid, allows to obtain nanotubes capable of dispersing in cement matrices with improved interaction at the interface (Construction and Building Materials 50, 2014, 116-129; Carbon 2005, 43, 6, 1239-45; ACI Mater J 2011, 108, 3, 327-32; Multi-scale performance and durability of carbon nanofiber/cement composites, in nanotechnology in construction, vol. 3. Springer; 2009, p. 345-350). However, obvious technical and economic problems are connected to such an approach: the acid treatment damages the carbon nanotubes, degrading their mechanical properties, and the removal of cations, such as acids, from the surface of aromatic systems is particularly complex, thus leading to an incomplete removal or to the need for demanding and costly procedures (J Disper Sci Technol 2003, 24, 1, 1-41).

The treatment of carbon nanotubes with ozone has also been reported, which led to the improvement of the breaking load and the compressive load of the cement mixtures (Carbon 1998, 36, 4, 459-62). However, ozone remains trapped in carbon-based materials and is difficult to apply on an industrial scale.

Also mechanical methods, such as ultra-sonication, ball milling, shear mixing, calendaring, stirring and extrusion, have been widely used (Construction and Building Materials 73 (2014) 113-124). In particular, although sonication appeared to be an effective method to disperse carbon nanotubes in cement matrices, it also emerged that the effectiveness of disentanglement is accompanied by a reduction in the aspect ratio, thus making it necessary to identify specific optimal sonication conditions (Cem Concr Compos 2013; 36: 25-32).

However, sonication is not a method that can be used for industrial applications.

In this sense, a process that appeared to have better possibilities of development is the chemical functionalization of the nanotubes combined with sonication, even though it involves an increase in the complexity of the procedure (Construction and Building Materials 73 (2014) 113-124).

For example, the combination of chemical and ultrasonic treatments has been reported: nanotubes modified with carboxylic groups have been dispersed in water by ultra-sonication and then added to the cement paste, obtaining an improvement in fracture properties rather than in compression load (Construction and Building Materials 70, 2014, 332-338).

It is therefore clear that there are many problems still to be solved for the use of carbon nanotubes in cement-based composite materials to be industrially applicable.

Carbon nanotubes, as said above, are sp² hybridized carbon allotropes characterized by nanometric dimensions and high aspect ratio. There are several sp² hybridized carbon allotropes that exhibit the same characteristics, such as nano-toroids, nano-cones, graphene nanowires and many others (M. Terrones et al., Nano Today 5.4, 2010, 351-372).

Graphene is a layer of carbon atoms, with the thickness of a single carbon atom, characterized by a polymeric nature and repeating cyclic aromatic units, typically with 5 or 6 carbon atoms, and lengths that can reach hundreds of nanometres. Graphene has therefore a high aspect ratio, calculated as the ratio between the longest side and the thickness of the graphene layer.

In recent years, great progress is being made in this field and it is believed that new allotropic forms of sp² carbon could be identified (J. Zhang et al., Carbon science in 2016: status, challenges and perspectives, Carbon 98, 2016, 708-732). It is therefore highly desirable to be able to render these allotropes compatible for composite materials with different types of matrices.

The use of graphene oxide (GO) in cement-based composites is known in the art: the GO appears to be an ideal candidate to increase the properties of these composites thanks to its excellent properties that can strengthen the fragile cement matrix and to the presence of oxygen-containing polar groups that can promote homogeneous dispersion in the cement-based material (Construction and Building Materials 73, 2014, 113-124).

In WO2013096990 the addition of 0.05% by weight of GO in a cement mortar has been shown to lead to an increase in compression and flexural load of 15-33% and 41-59%, respectively.

Babak and collaborators (The Scientific World Journal, 2014, 201) reported a cement mortar comprising GO in the presence of a super-plasticizer such as a polycarboxylate. With the addition of 1.5% by weight of GO, there is an increase in the load at break equal to 48%. The SEM (Scanning Electron Microscopy) analysis showed a good dispersion of the GO lamellae and did not reveal any agglomeration.

It is therefore known that GO has an important effect on the pore structure of the hardened cement paste: the diameter and the total area of the pores are reduced and, overall, so is the porosity. GO can in fact promote a more regular hydration of the crystals in the holes and in the cracks of the hardened cement paste, occupying space and favouring the formation of a more compact structure, with a consequent increase in the compression load and the flexural module. As the size of the GO lamellae decreases, the hydrated crystals become denser, leading to a structure with higher density (Construction and building materials 49, 2013,121-127; Construction and Building Materials 64, 2014, 231-239; Materials 2016 , 9, 1015).

The results with GO therefore appear to be very promising.

GO is obtained by oxidation of graphite, for example via the Staudenmeier method (Staudenmaier L. Ber. Dtsch. Chem. Ges. 1898, 31, 1481-1487), which uses a mixture H₂SO₄/HNO₃ (2/1) with KClO₃ as oxidizer, or via the Hummers method (Hummers WS, Offeman RE, J. Am. Chem. Soc. 1958, 80, 1339-1339), which uses H₂SO₄/NaNO₃ and KMnO₄. The Staudenmeir method produces ClO₂, which is explosive, the Hummers method forms NO₂/N₂O₄ and manganese ions, which are difficult to remove, requiring strong acids that remain absorbed on the graphitic substrate.

Patent CN 106277A describes acement-based conductive composite material, preparation method and application thereof using a pyrrole that is a polymer of pyrrole units.

These chemical reactions involve the use of acidic substances, which are very difficult to remove from the graphitic substrate, and very harsh reaction conditions that make their applicability on an industrial scale difficult. Furthermore, these reactions clearly have atomic efficiency lower than 100%. Furthermore, GO does not maintain the graphite or graphene layer structure, i.e. the aromatic structure capable of conducting the electric current, a property useful for applications in so-called "smart" materials.

Thus, it appears clearly that, although the usefulness of introducing nanometric carbon allotropes, endowed with high aspect ratio, in cement-based composite materials, has extensively been demonstrated, several problems still remain unsolved. In particular, methods known to date require using carbon allotropes modified via costly and poorly environmentally-friendly processes, and such modified carbon allotropes are still not able to guarantee optimal compatibility with the matrices, rendering the composite material difficult to obtain as well as poorly homogeneous.

### SUMMARY OF THE INVENTION

The Applicant has thus realized that there is a need to obtain cement-based composite materials, such as for example cement, cement paste, cement mortar or concrete, comprising carbon allotropes characterized by nanometric size and high aspect ratio, being highly compatible with the matrix and at the same time easily obtained with efficient and environmentally friendly methods.

After extensive experimentation the Applicant has surprisingly found that sp² hybridized carbon allotropes, in the form of adducts with pyrrole derivatives, can be mixed to cement-based composite materials, imparting them extremely advantageous properties. The resulting composite materials, wherein the carbon allotrope is homogeneously dispersed, can be prepared with highly reproducible methods, which are simple and applicable on an industrial scale, due to the high compatibility between the allotrope/pyrrole derivative adducts and the cement-based matrices.

Thus, a first aspect of the present invention is a composite material comprising:
a) a cement-based material, preferably portland cement; and
b) an adduct between a sp² hybridized carbon allotrope and a pyrrole derivative, wherein said pyrrole derivative is represented by Formula (I)

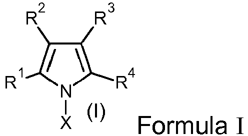

wherein R₁, R₂, R₃, and R₄ are independently selected from the group consisting of: hydrogen, linear or branched C₁-C₂₂ alkyl, linear or branched C₂-C₂₂ alkenyl or alkynyl, aryl, linear or branched C₁-C₂₂ alkyl-aryl, linear or branched C₂-C₂₂ alkenyl-aryl, linear or branched C₂-C₂₂ alkynyl-aryl, and heteroaryl; and
X is selected from the group consisting of: 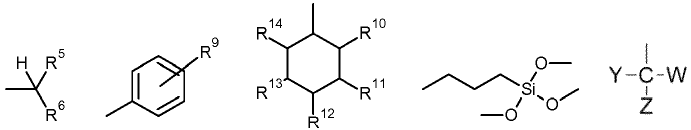 wherein:
   R₅ and R₆ are independently selected from the group consisting of: hydrogen, C₁-C₁₈ alkyl, linear or branched C₂-C₁₈ alkenyl or alkynyl, C₁-C₁₈ alkyl-hydroxyl, aryl, linear or branched C₁-C₂₂ alkyl-aryl, linear or branched C₂-C₂₂ alkenyl-aryl, linear or branched C₂-C₂₂ alkynyl-aryl, and heteroaryl;
   or R₅ and R₆ are independently: 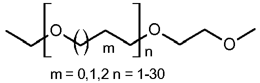 wherein if only one between R₅ or R₆ is 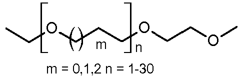 then the other one is selected from the group consisting of: hydrogen, C₁-C₁₈ alkyl, and linear or branched C₂-C₁₈ alkenyl or alkynyl;
   or R₅ and R₆ are independently selected from the group consisting of: hydrogen and one of the following formulae 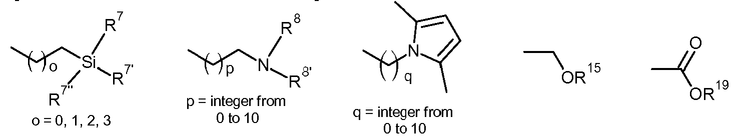 wherein
      R₇, R_{7'}, R_{7"}, R₈ and R_{8'} are independently selected from the group consisting of: C₁-C₄ alkyl, and C₁-C₄ oxy-alkyl;
      R₁₅ is selected from the group consisting of: hydrogen, linear or branched C₁-C₂₂ alkyl, linear or branched C₂-C₂₂ alkenyl or alkynyl, aryl, linear or branched C₁-C₂₂ alkyl-aryl, linear or branched C₂-C₂₂ alkenyl-aryl, linear or branched C₂-C₂₂ alkynyl-aryl, linear or branched C₂-C₂₂ acyl-alkyl, linear or branched C₃₋C₂₂ acyl-alkenyl or acyl-alkynyl, acyl-aryl, acyl-alky-aryl with linear or branched C₂-C₂₂ acyl-alkyl, acyl-alkenyl-aryl with linear or branched C₃₋C₂₂ acyl-alkenyl, acyl-alkynyl-aryl with linear or branched C₃₋C₂₂ acyl-alkynyl, and heteroaryl; and
      R₁₉ is selected from the group consisting of: hydrogen, linear or branched C₁-C₂₂ alkyl, linear or branched C₂-C₂₂ alkenyl or alkynyl, aryl, linear or branched C₁-C₂₂ alkyl-aryl, linear or branched C₂-C₂₂ alkenyl-aryl, linear or branched C₂-C₂₂ alkynyl-aryl, and heteroaryl;
   R₉ is selected from the group consisting of: hydrogen, alkyl, aryl, benzyl, amine, alkyl-amine, aryl-amine, benzyl-amine, and amino-aryl;
   R₁₀, R₁₁, R₁₂, R₁₃ and R₁₄ are independently selected from the group consisting of: hydrogen, C₁-C₁₈ alkyl, linear or branched C₂-C₁₈ alkenyl or alkynyl, and 1-(4-aminocyclohexyl)methylene;
   Y, Z and W are independently selected from a first group consisting of: hydrogen, C₁-C₁₈ alkyl, linear or branched C₂-C₁₈ alkenyl or alkynyl, or from a second group consisting of the following formulae: 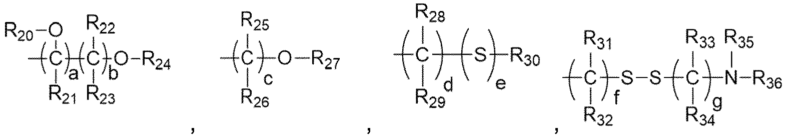 **wherein** R₂₀, R₂₁, R₂₂, R₂₃, R₂₄, R₂₅, R₂₆, R₂₇, R₂₈, R₂₉, R₃₀, R₃₁, R₃₂, R₃₃, R₃₄, R₃₅ and R₃₆ are independently selected from the group consisting of: hydrogen, C₁-C₁₈ alkyl, linear or branched C₂-C₁₈ alkenyl or alkynyl, aryl, linear or branched C₁-C₂₂ alkyl-aryl, linear or branched C₂-C₂₂ alkenyl-aryl, linear or branched C₂-C₂₂ alkynyl-aryl, heteroaryl, and carboxyl; e is an integer of from 1 to 4, and a, b, c, d, f, and g are, independently from one another, an integer of from 1 to 12;
   and wherein at least one from Y, W, and Z is selected in said second group.

A second aspect of the present invention is a composite material comprising:
a) a cement-based material, preferably portland cement; and
b) an adduct between a sp² hybridized carbon allotrope and a pyrrole derivative, wherein said adduct is on the surface of a polar fiber and wherein said pyrrole derivative is represented by Formula (I)

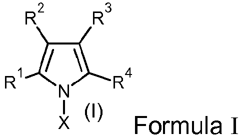

wherein R₁, R₂, R₃, and R₄ are independently selected from the group consisting of: hydrogen, linear or branched C₁-C₂₂ alkyl, linear or branched C₂-C₂₂ alkenyl or alkynyl, aryl, linear or branched C₁-C₂₂ alkyl-aryl, linear or branched C₂-C₂₂ alkenyl-aryl, linear or branched C₂-C₂₂ alkynyl-aryl, and heteroaryl; and
X is selected from the group consisting of: 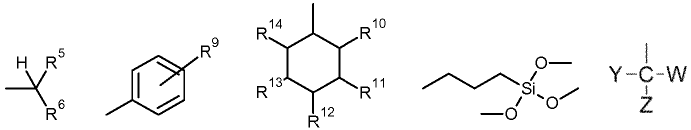 wherein:
   R₅ and R₆ are independently selected from the group consisting of: hydrogen, C₁-C₁₈ alkyl, linear or branched C₂-C₁₈ alkenyl or alkynyl, C₁-C₁₈ alkyl-hydroxyl, aryl, linear or branched C₁-C₂₂ alkyl-aryl, linear or branched C₂-C₂₂ alkenyl-aryl, linear or branched C₂-C₂₂ alkynyl-aryl, and heteroaryl;
   or R₅ and R₆ are independently: 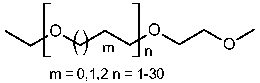 wherein if only one between R₅ or R₆ is 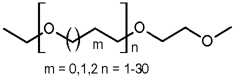 then the other one is selected from the group consisting of: hydrogen, C₁-C₁₈ alkyl, and linear or branched C₂-C₁₈ alkenyl or alkynyl;
   or R₅ and R₆ are independently selected from the group consisting of: hydrogen and one of the following formulae 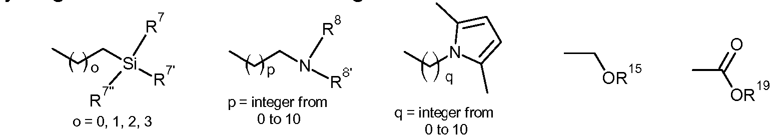 wherein
      R₇, R_{7'}, R_{7"}, R₈ and R_{8'} are independently selected from the group consisting of: C₁-C₄ alkyl, and C₁-C₄ oxy-alkyl;
      R₁₅ is selected from the group consisting of: hydrogen, linear or branched C₁-C₂₂ alkyl, linear or branched C₂-C₂₂ alkenyl or alkynyl, aryl, linear or branched C₁-C₂₂ alkyl-aryl, linear or branched C₂-C₂₂ alkenyl-aryl, linear or branched C₂-C₂₂ alkynyl-aryl, linear or branched C₂-C₂₂ acyl-alkyl, linear or branched C₃₋C₂₂ acyl-alkenyl or acyl-alkynyl, acyl-aryl, acyl-alky-aryl with linear or branched C₂-C₂₂ acyl-alkyl, acyl-alkenyl-aryl with linear or branched C₃₋C₂₂ acyl-alkenyl, acyl-alkynyl-aryl with linear or branched C₃₋C₂₂ acyl-alkynyl, and heteroaryl; and
      R₁₉ is selected from the group consisting of: hydrogen, linear or branched C₁-C₂₂ alkyl, linear or branched C₂-C₂₂ alkenyl or alkynyl, aryl, linear or branched C₁-C₂₂ alkyl-aryl, linear or branched C₂-C₂₂ alkenyl-aryl, linear or branched C₂-C₂₂ alkynyl-aryl, and heteroaryl;
   R₉ is selected from the group consisting of: hydrogen, alkyl, aryl, benzyl, amine, alkyl-amine, aryl-amine, benzyl-amine, and amino-aryl;
   R₁₀, R₁₁, R₁₂, R₁₃ and R₁₄ are independently selected from the group consisting of: hydrogen, C₁-C₁₈ alkyl, linear or branched C₂-C₁₈ alkenyl or alkynyl, and 1-(4-aminocyclohexyl)methylene;
   Y, Z and W are independently selected from a first group consisting of: hydrogen, C₁-C₁₈ alkyl, linear or branched C₂-C₁₈ alkenyl or alkynyl, or from a second group consisting of the following formulae: 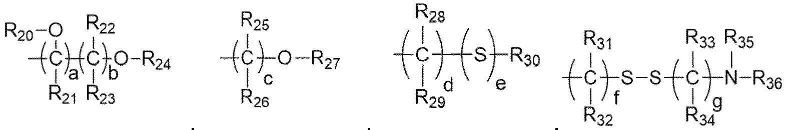 wherein R₂₀, R₂₁, R₂₂, R₂₃, R₂₄, R₂₅, R₂₆, R₂₇, R₂₈, R₂₉, R₃₀, R₃₁, R₃₂, R₃₃, R₃₄, R₃₅ and R₃₆ are independently selected from the group consisting of: hydrogen, C₁-C₁₈ alkyl, linear or branched C₂-C₁₈ alkenyl or alkynyl, aryl, linear or branched C₁-C₂₂ alkyl-aryl, linear or branched C₂-C₂₂ alkenyl-aryl, linear or branched C₂-C₂₂ alkynyl-aryl, heteroaryl, and carboxyl; e is an integer of from 1 to 4, and a, b, c, d, f, and g are, independently from one another, an integer of from 1 to 12;
   and wherein at least one from Y, W, and Z is selected in said second group.

The third and final aspect of the present invention is a process for the preparation of the composite materials comprising a cement-based material and an adduct between a sp² hybridized carbon allotrope and a pyrrole derivative, said adduct being optionally on the surface of a polar fiber, as defined above.

### DETAILED DESCRIPTION OF THE INVENTION

### Definitions

According to the present invention, the term "fiber(s)" are intended as referring to a material characterized by having a dimension, typically the length, substantially greater than its section, therefore characterized by a high aspect ratio value. Preferred fibers according to the invention are sepiolite, paligorskite, also known as attapulgite, and halloysite.

According to the present invention, the term "pyrrole derivative(s)" are meant to refer to a compound of Formula (I) as defined in the present description and the attached claims.

According to the present invention, the term "adduct" refers to a compound obtained by an addition reaction; more specifically, the term adduct refers to those addition compounds wherein each component, linked by more or less labile bonds, i.e. by covalent bonds or by more labile inter-molecular interactions, somewhat retains its own individuality. In particular, according to the present invention the term "adduct(s)" refers to and adduct obtained by the interaction, via covalent or non-covalent bonds, between a pyrrole derivative and a sp² hybridized carbon allotrope. Preferred adducts are those between a sp² hybridized carbon allotrope selected from graphite, nanographite, graphene, carbon black and carbon nanotubes, and a pyrrole derivative represented by the following formula 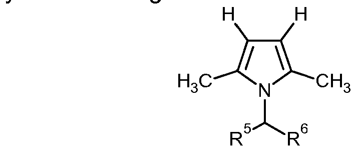 wherein R₅ and R₆ are independently selected from the group consisting of: hydrogen, C₁-C₁₈ alkyl, and C₁-C₁₈ alkyl-hydroxyl, are particularly preferred.

According to the present invention, the term "alkyl-hydroxyl" refers to an alkyl chain wherein one or more hydrogen atoms, in any position of the chain, have been replaced with a hydroxy group.

According to the present invention, as well as to the common definition in material science, the term "composite material(s)" refers to a heterogeneous material, i.e. consisting of two or more phases with different physical properties. Such a material is therefore characterized by a non-homogeneous structure and each phase constituting it are separated by a net interface of zero thickness. More in particular, according to the present invention, the term "cement-based composite material(s)" refers to a cement paste prepared mixing cement and an aqueous dispersion comprising reinforcing materials.

According to the present invention, the term "cement paste" refers to a cement-based material obtained mixing water and cement, without adding any thin or coarse aggregate.

### Detailed description

A first aspect of the present invention is a composite material comprising:
a) a cement-based material, preferably portland cement; and
b) an adduct between a sp² hybridized carbon allotrope and a pyrrole derivative, wherein said pyrrole derivative is represented by Formula (I)

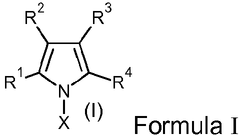

wherein R₁ R₂, R₃, and R₄ are independently selected from the group consisting of: hydrogen, linear or branched C₁-C₂₂ alkyl, linear or branched C₂-C₂₂ alkenyl or alkynyl, aryl, linear or branched C₁-C₂₂ alkyl-aryl, linear or branched C₂-C₂₂ alkenyl-aryl, linear or branched C₂-C₂₂ alkynyl-aryl, and heteroaryl; and
X is selected from the group consisting of: 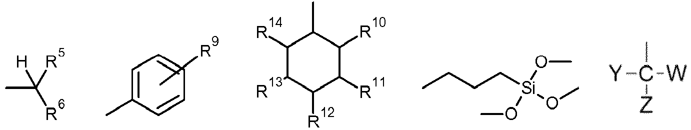 wherein:
   R₅ and R₆ are independently selected from the group consisting of: hydrogen, C₁-C₁₈ alkyl, linear or branched C₂-C₁₈ alkenyl or alkynyl, C₁-C₁₈ alkyl-hydroxyl, aryl, linear or branched C₁-C₂₂ alkyl-aryl, linear or branched C₂-C₂₂ alkenyl-aryl, linear or branched C₂-C₂₂ alkynyl-aryl, and heteroaryl;
   or R₅ and R₆ are independently: 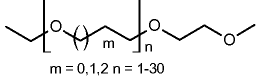 wherein if only one between R₅ or R₆ is 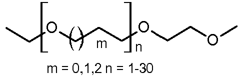 then the other one is selected from the group consisting of: hydrogen, C₁-C₁₈ alkyl, and linear or branched C₂-C₁₈ alkenyl or alkynyl;
   or R₅ and R₆ are independently selected from the group consisting of: hydrogen and one of the following formulae 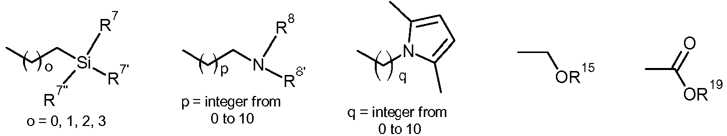 wherein
      R₇, R_{7'}, R_{7"}, R₈ and R_{8'} are independently selected from the group consisting of: C₁-C₄ alkyl, and C₁-C₄ oxy-alkyl;
      R₁₅ is selected from the group consisting of: hydrogen, linear or branched C₁-C₂₂ alkyl, linear or branched C₂-C₂₂ alkenyl or alkynyl, aryl, linear or branched C₁-C₂₂ alkyl-aryl, linear or branched C₂-C₂₂ alkenyl-aryl, linear or branched C₂-C₂₂ alkynyl-aryl, linear or branched C₂-C₂₂ acyl-alkyl, linear or branched C₃₋C₂₂ acyl-alkenyl or acyl-alkynyl, acyl-aryl, acyl-alky-aryl with linear or branched C₂-C₂₂ acyl-alkyl, acyl-alkenyl-aryl with linear or branched C₃₋C₂₂ acyl-alkenyl, acyl-alkynyl-aryl with linear or branched C₃₋C₂₂ acyl-alkynyl, and heteroaryl; and
      R₁₉ is selected from the group consisting of: hydrogen, linear or branched C₁-C₂₂ alkyl, linear or branched C₂-C₂₂ alkenyl or alkynyl, aryl, linear or branched C₁-C₂₂ alkyl-aryl, linear or branched C₂-C₂₂ alkenyl-aryl, linear or branched C₂-C₂₂ alkynyl-aryl, and heteroaryl;
   R₉ is selected from the group consisting of: hydrogen, alkyl, aryl, benzyl, amine, alkyl-amine, aryl-amine, benzyl-amine, and amino-aryl;
   R₁₀, R₁₁, R₁₂, R₁₃ and R₁₄ are independently selected from the group consisting of: hydrogen, C₁-C₁₈ alkyl, linear or branched C₂-C₁₈ alkenyl or alkynyl, and 1-(4-aminocyclohexyl)methylene;
   Y, Z and W are independently selected from a first group consisting of: hydrogen, C₁-C₁₈ alkyl, linear or branched C₂-C₁₈ alkenyl or alkynyl, or from a second group consisting of the following formulae: 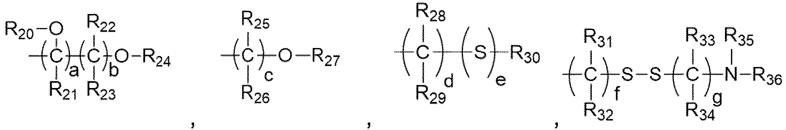 wherein R₂₀, R₂₁, R₂₂, R₂₃, R₂₄, R₂₅, R₂₆, R₂₇, R₂₈, R₂₉, R₃₀, R₃₁, R₃₂, R₃₃, R₃₄, R₃₅ and R₃₆ are independently selected from the group consisting of: hydrogen, C₁-C₁₈ alkyl, linear or branched C₂-C₁₈ alkenyl or alkynyl, aryl, linear or branched C₁-C₂₂ alkyl-aryl, linear or branched C₂-C₂₂ alkenyl-aryl, linear or branched C₂-C₂₂ alkynyl-aryl, heteroaryl, and carboxyl; e is an integer of from 1 to 4, and a, b, c, d, f, and g are, independently from one another, an integer of from 1 to 12;
   and wherein at least one from Y, W, and Z is selected in said second group.

A second aspect of the present invention is a composite material comprising:
a) a cement-based material, preferably portland cement; and
b) an adduct between a sp² hybridized carbon allotrope and a pyrrole derivative, wherein said adduct is on the surface of a polar fiber and wherein said pyrrole derivative is represented by Formula (I)

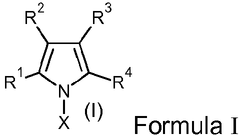

wherein R₁, R₂, R₃, and R₄ are independently selected from the group consisting of: hydrogen, linear or branched C₁-C₂₂ alkyl, linear or branched C₂-C₂₂ alkenyl or alkynyl, aryl, linear or branched C₁-C₂₂ alkyl-aryl, linear or branched C₂-C₂₂ alkenyl-aryl, linear or branched C₂-C₂₂ alkynyl-aryl, and heteroaryl; and
X is selected from the group consisting of: 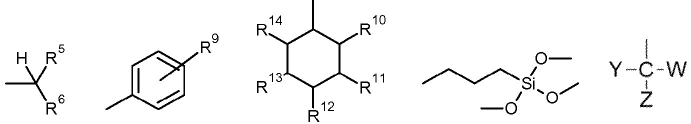 wherein:
   R₅ and R₆ are independently selected from the group consisting of: hydrogen, C₁-C₁₈ alkyl, linear or branched C₂-C₁₈ alkenyl or alkynyl, C₁-C₁₈ alkyl-hydroxyl, aryl, linear or branched C₁-C₂₂ alkyl-aryl, linear or branched C₂-C₂₂ alkenyl-aryl, linear or branched C₂-C₂₂ alkynyl-aryl, and heteroaryl;
   or R₅ and R₆ are independently: 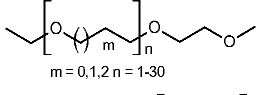 wherein if only one between R₅ or R₆ is 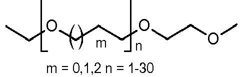 then the other one is selected from the group consisting of: hydrogen, C₁-C₁₈ alkyl, and linear or branched C₂-C₁₈ alkenyl or alkynyl;
   or R₅ and R₆ are independently selected from the group consisting of: hydrogen and one of the following formulae 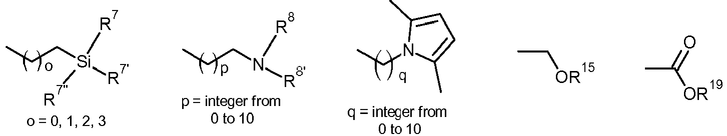 wherein
      R₇, R_{7'}, R_{7"}, R₈ and R_{8'} are independently selected from the group consisting of: C₁-C₄ alkyl, and C₁-C₄ oxy-alkyl;
      R₁₅ is selected from the group consisting of: hydrogen, linear or branched C₁-C₂₂ alkyl, linear or branched C₂-C₂₂ alkenyl or alkynyl, aryl, linear or branched C₁-C₂₂ alkyl-aryl, linear or branched C₂-C₂₂ alkenyl-aryl, linear or branched C₂-C₂₂ alkynyl-aryl, linear or branched C₂-C₂₂ acyl-alkyl, linear or branched C₃₋C₂₂ acyl-alkenyl or acyl-alkynyl, acyl-aryl, acyl-alky-aryl with linear or branched C₂-C₂₂ acyl-alkyl, acyl-alkenyl-aryl with linear or branched C₃₋C₂₂ acyl-alkenyl, acyl-alkynyl-aryl with linear or branched C₃₋C₂₂ acyl-alkynyl, and heteroaryl; and
      R₁₉ is selected from the group consisting of: hydrogen, linear or branched C₁-C₂₂ alkyl, linear or branched C₂-C₂₂ alkenyl or alkynyl, aryl, linear or branched C₁-C₂₂ alkyl-aryl, linear or branched C₂-C₂₂ alkenyl-aryl, linear or branched C₂-C₂₂ alkynyl-aryl, and heteroaryl;
   R₉ is selected from the group consisting of: hydrogen, alkyl, aryl, benzyl, amine, alkyl-amine, aryl-amine, benzyl-amine, and amino-aryl;
   R₁₀, R₁₁, R₁₂, R₁₃ and R₁₄ are independently selected from the group consisting of: hydrogen, C₁-C₁₈ alkyl, linear or branched C₂-C₁₈ alkenyl or alkynyl, and 1-(4-aminocyclohexyl)methylene;
   Y, Z and W are independently selected from a first group consisting of: hydrogen, C₁-C₁₈ alkyl, linear or branched C₂-C₁₈ alkenyl or alkynyl, or from a second group consisting of the following formulae: 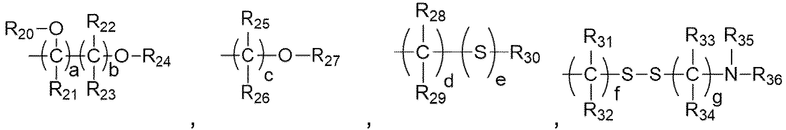 wherein R₂₀, R₂₁, R₂₂, R₂₃, R₂₄, R₂₅, R₂₆, R₂₇, R₂₈, R₂₉, R₃₀, R₃₁, R₃₂, R₃₃, R₃₄, R₃₅ and R₃₆ are independently selected from the group consisting of: hydrogen, C₁-C₁₈ alkyl, linear or branched C₂-C₁₈ alkenyl or alkynyl, aryl, linear or branched C₁-C₂₂ alkyl-aryl, linear or branched C₂-C₂₂ alkenyl-aryl, linear or branched C₂-C₂₂ alkynyl-aryl, heteroaryl, and carboxyl; e is an integer of from 1 to 4, and a, b, c, d, f, and g are, independently from one another, an integer of from 1 to 12;
   and wherein at least one from Y, W, and Z is selected in said second group.

According to a preferred embodiment, the portland cement comprises at least one of the following: alumina, calcium oxide, silicon oxide, iron oxide, or mixtures thereof.

Typically, in the cement-based material the oxides are in the form of silicates and aluminates.

According to a preferred embodiment, the cement-based material comprises or consists of Portland cement of resistance class 42,5R.

According to another preferred embodiment, the cement-based material consists of Portland cement Portland cement with pozzolanic or hydraulic additions of resistance class 42,5R.

Optionally, the cement-based material further comprises reinforcing materials, such as fibers, for example steel, polyvinyl alcohol, polypropylene and nylon, cellulose, glass or carbon fibers.

According to a specific embodiment of the present invention, the reinforcing fibers are coated with adducts between a sp² hybridized carbon allotrope and a pyrrole derivative, prepared as better described below.

The preparation of the adducts between sp² hybridized carbon allotropes and pyrrole derivatives, as well as that of pyrrole derivatives, is well known in the art, and is disclosed for example in WO 2016/050887 or in *"*Facile and sustainable functionalization of graphene layers with pyrrole compounds", V. Barbera, et al., Pure Appl. Chem., 2018, 90(2), 253-270.

The adducts are prepared e.g. dispersing the pyrrole derivative and the sp² hybridized carbon allotrope in a low boiling and environmentally friendly solvent. The dispersion is prepared by simple magnetic or mechanical stirring, or by sonication. Then the solvent is evaporated in suitable conditions, so as to avoid evaporation of the functionalized molecule, according to the knowledge of the expert in the field. Evaporation can be carried out by different means, at atmospheric or reduced pressure.

Other methods to allow the pyrrole derivative to adhere to the substrate (i.e. the sp² hybridized carbon allotrope) can be implemented, for example by using a spray-dryer.

Thus, for the adduct to be formed, the binary mixture carbon allotrope/functionalizing molecule needs to be thermally treated according to specific experimental conditions of time and temperature (see V. Barbera, et al. "Facile and sustainable functionalization of graphene layers with pyrrole compounds", Pure Appl. Chem., 2018, 90(2), 253-270; or WO2016/050887).

This step has the goal of obtaining an adduct from which the pyrrole derivative cannot be extracted.

Alternatively, the pyrrole derivative and the sp² hybridized carbon allotrope can be mixed in a suitable solvent, preferably water, forming the adduct, e.g. at the reflux temperature for 2-6 hours.

Finally, the pyrrole derivative not bonded to the sp² hybridized carbon allotrope can be removed e.g. by continuously washing the obtained adduct with solvents, such as acetone, until the washings result to be clean.

Alternatively, the adduct between the sp² hybridized carbon allotrope and the pyrrole derivative is obtained by reaction of a suitable primary amine, a suitable diketone and the desired carbon allotrope.

The process for coating fibers, preferably polar fibers, with adducts between sp² hybridized carbon allotropes and pyrrole derivatives according to the present invention can be carried out according to several methodologies, all resulting in a stable interaction between the fiber and the adduct.

According to a preferred mode, the fiber coating process according to the present invention is carried out contacting the fiber and the adduct simply by mixing them without any medium, and subsequent thermal or thermo-mechanical treatment.

Preferably, in said mode said fibers are selected from sepiolite, paligorskite, e halloysite.

According to said preferred mode the process comprises the following steps:
(i) feeding the fiber and the adduct, in a weight ratio of between 0.5:1-6:1 (fiber:adduct), in a vessel suitable for mixing:
(ii) mixing;
(iii) thermal treatment; or
(iv) thermo-mechanical treatment.

The mixing step is preferably carried out according to techniques known to those skilled in the art, such as simple rolling of the vessel, stirring by means of a magnetic stirrer, stirring by means of a mechanical stirrer.

Preferably, the thermal treatment is carried out at a temperature range of from 10°C to 150°C, more preferably of from 15°C to 100°C, even more preferably of from 20°C to 50°C.

The thermo-mechanical treatment is carried out according to techniques and by means known to those skilled in the art, such as mortars, ball mills or pin mills, preferably at a temperature range of from 10°C to 50°C.

According to another preferred more, the fiber coating process according to the present invention is carried out by contacting the fiber and the adducts in at least one solvent, which is subsequently removed.

According to this preferred mode, the process comprises the following steps:
(i) dispersing the fiber and the adduct, in a weight ratio of between 0.5:1-6:1 (fiber:adduct), in said at least one solvent;
(ii) thermo-mechanical treatment;
(iii) precipitation of the coated fiber;
(iv) removal of the solvent; and
(v) drying of the coated fibers obtained.

Preferably, in step (i) of the process according to this preferred mode the fiber and the adduct are dispersed in two separate vessels and the obtained dispersions are subsequently mixed together.

The at least one solvent used in step (i) of the process according to this preferred mode is preferably selected from water, an environmentally friendly organic solvent, and mixtures thereof.

Preferably, said environmentally friendly organic solvent is selected from the group comprising alcohols, ketones and esters.

More preferably, said environmentally friendly organic solvent is selected from the group comprising ethanol, isopropanol, acetone, methyl ethyl ketone, ethyl acetate, and mixtures thereof.

In a particularly preferred embodiment said at least one solvent is water.

Preferably, the thermo-mechanical treatment in step (ii) of this preferred mode is carried out at a temperature range of from 10°C to the solvent reflux temperature, more preferably of from 20°C to 50°C.

Preferably, the thermo-mechanical treatment in step (ii) of this preferred mode is carried out for an period of time from 1 to 960 minutes, preferably of from 5 to 360 minutes, more preferably of from 10 and 60 minutes.

Step (iii) of the process according to this preferred mode can be carried out according to techniques and by means known to those skilled in the art, such as by means of centrifugation.

Step (iv) of the process according to this preferred mode can be carried out according to techniques and by means known to those skilled in the art, such as via filtration under atmospheric pressure or under vacuum, or evaporation under reduced pressure.

Preferably, the adduct's amount with respect to the cement-based material, express as weight %, is of from 0.001 to 20%, more preferably of form 0.05 to 10%, even more preferably of from 0.1 to 5%.

Preferably, said adducts are characterized by a weight ratio between sp² hybridized carbon allotrope and pyrrole derivative of from 1:1 to 1:0.001, more preferably of from 2:1 to 1:0.005, even more preferably of from 10:1 e 1:0.01.

Preferably, the sp² hybridized carbon allotrope is selected form the group consisting of: graphene, nanographite, preferably made of few graphene layers (from a few layers to a few tens of layers), graphite, fullerene, nano-toroids, nano-cones, graphene nanoribbons, graphene nanoplatelets, single- or multi-walled carbon nanotubes, and carbon black.

In a preferred embodiment, said sp² hybridized carbon allotrope is selected form the group consisting of fullerene, single- or multi-walled carbon nanotubes, graphene, graphite and nanographite with from 2 to 100 graphene layers.

In a particularly preferred embodiment the sp² hybridized carbon allotrope is selected from graphite, nanographite, graphene and carbon nanotubes.

In an embodiment the sp² hybridized carbon allotrope contains functional groups selected from the group comprising:
- oxygenated functional groups, preferably hydroxy and epoxy groups;
- carbonyl containing functional groups, preferably aldehydes, ketones, carboxylic acids;
- nitrogen containing functional groups, preferably amines, amides, nitriles, diazonium salts, imines;
- sulfur containing functional groups, preferably sulphides, disulphides, mercaptans, sulfones, sulfinic and sulfonic groups.

Preferably, the carbon allotrope is nanographite oxide or graphene oxide.

Preferably, the pyrrole derivatives used to prepare the adducts useful for the present invention are represented by Formula (I) 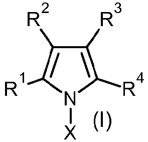
wherein R₁, R₂, R₃, and R₄ are independently selected from the group consisting of: hydrogen, linear or branched C₁-C₂₂ alkyl, linear or branched C₂-C₂₂ alkenyl or alkynyl, aryl, linear or branched C₁-C₂₂ alkyl-aryl, linear or branched C₂-C₂₂ alkenyl-aryl, linear or branched C₂-C₂₂ alkynyl-aryl, and heteroaryl;
and wherein X is represented by: 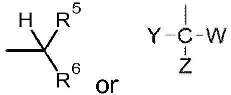 wherein:
   R₅ and R₆ are independently selected from the group consisting of: hydrogen, C₁-C₁₈ alkyl, linear or branched C₂-C₁₈ alkenyl or alkynyl, C₁-C₁₈ alkyl-hydroxyl, aryl, linear or branched C₁-C₂₂ alkyl-aryl, linear or branched C₂-C₂₂ alkenyl-aryl, linear or branched C₂-C₂₂ alkynyl-aryl, and heteroaryl;
   or R₅ and R₆ are independently selected from the group consisting of: hydrogen and one of the following formulae 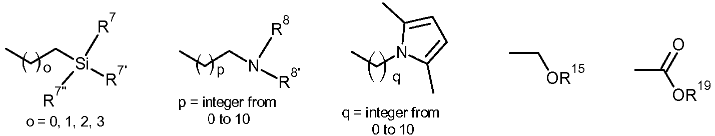 wherein
      R₇, R_{7'}, R_{7"}, R₈ and R_{8'} are independently selected from the group consisting of: C₁-C₄ alkyl, and C₁-C₄ oxy-alkyl;
      R₁₅ is selected from the group consisting of: hydrogen, linear or branched C₁-C₂₂ alkyl, linear or branched C₂-C₂₂ alkenyl or alkynyl, aryl, linear or branched C₁-C₂₂ alkyl-aryl, linear or branched C₂-C₂₂ alkenyl-aryl, linear or branched C₂-C₂₂ alkynyl-aryl, linear or branched C₂-C₂₂ acyl-alkyl, linear or branched C₃₋C₂₂ acyl-alkenyl or acyl-alkynyl, acyl-aryl, acyl-alky-aryl with linear or branched C₂-C₂₂ acyl-alkyl, acyl-alkenyl-aryl with linear or branched C₃₋C₂₂ acyl-alkenyl, acyl-alkynyl-aryl with linear or branched C₃₋C₂₂ acyl-alkynyl, and heteroaryl; and
      R₁₉ is selected from the group consisting of: hydrogen, linear or branched C₁-C₂₂ alkyl, linear or branched C₂-C₂₂ alkenyl or alkynyl, aryl, linear or branched C₁-C₂₂ alkyl-aryl, linear or branched C₂-C₂₂ alkenyl-aryl, linear or branched C₂-C₂₂ alkynyl-aryl, and heteroaryl;
   and Y, Z and W are independently selected from a first group consisting of: hydrogen, C₁-C₁₈ alkyl, linear or branched C₂-C₁₈ alkenyl or alkynyl, or from a second group consisting of the following formulae: 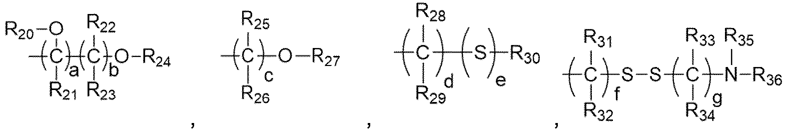 wherein R₂₀, R₂₁, R₂₂, R₂₃, R₂₄, R₂₅, R₂₆, R₂₇, R₂₈, R₂₉, R₃₀, R₃₁, R₃₂, R₃₃, R₃₄, R₃₅, and R₃₆ are independently selected from the group consisting of: hydrogen, C₁-C₁₈ alkyl, linear or branched C₂-C₁₈ alkenyl or alkynyl, aryl, linear or branched C₁-C₂₂ alkyl-aryl, linear or branched C₂-C₂₂ alkenyl-aryl, linear or branched C₂-C₂₂ alkynyl-aryl, heteroaryl, and carboxyl; e is an integer of from 1 to 4, and a, b, c, d, f, and g are, independently from one another, an integer of from 1 to 12;
   and wherein at least one from Y, W, and Z is selected in said second group.

Preferably, said R₅ and R₆ groups are independently selected from the group consisting of: hydrogen, C₁-C₁₈ alkyl, linear or branched C₂-C₁₈ alkenyl or alkynyl, C₁-C₁₈ alkyl-hydroxyl, aryl, linear or branched C₁-C₂₂ alkyl-aryl, linear or branched C₂-C₂₂ alkenyl-aryl, linear or branched C₂-C₂₂ alkynyl-aryl, and heteroaryl

Even more preferably, said R₅ and R₆ groups are independently selected from the group consisting of: hydrogen, C₁-C₁₈ alkyl, and C₁-C₁₈ alkyl-hydroxyl.

In a preferred embodiment, said R₅ and R₆ groups are independently selected from the group consisting of: hydrogen, C₁-C₁₈ alkyl, C₁-C₃ alkyl-hydroxyl.

In a preferred embodiment, W is selected in said first group and Y and Z are independently selected in said second group; R₂₀, R₂₁, R₂₅, R₂₆, R₂₈, R₂₉, R₃₁, and R₃₂ are independently selected from the group consisting of: hydrogen, C₁-C₁₈ alkyl, linear or branched C₂-C₁₈ alkenyl or alkynyl; and R₂₂, R₂₃, R₂₄, R₂₇, R₃₀, R₃₃, R₃₄, R₃₅ and R₃₆ are independently selected from the group consisting of: hydrogen, C₁-C₁₈ alkyl, linear or branched C₂-C₁₈ alkenyl or alkynyl, aryl, linear or branched C₁-C₂₂ alkyl-aryl, linear or branched C₂-C₂₂ alkenyl-aryl, linear or branched C₂-C₂₂ alkynyl-aryl, heteroaryl, and carboxyl.

In an alternative embodiment, W and Z are independently selected in said first group and Y is selected in said second group; R₂₀, R₂₁, R₂₅, R₂₆, R₂₈, R₂₉, R₃₁, and R₃₂ are independently selected from the group consisting of: hydrogen, C₁-C₁₈ alkyl, linear or branched C₂-C₁₈ alkenyl or alkynyl; and R₂₂, R₂₃, R₂₄, R₂₇, R₃₀, R₃₃, R₃₄, R₃₅ and R₃₆ are independently selected from the group consisting of: hydrogen, C₁-C₁₈ alkyl, linear or branched C₂-C₁₈ alkenyl or alkynyl, aryl, linear or branched C₁-C₂₂ alkyl-aryl, linear or branched C₂-C₂₂ alkenyl-aryl, linear or branched C₂-C₂₂ alkynyl-aryl, heteroaryl, and carboxyl.

In an alternative embodiment the pyrrole derivatives used to prepare the adducts useful for the present invention are preferably selected from the group consisting of the compounds represented by the following formula 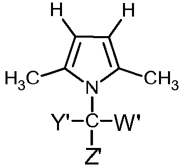 wherein Y', Z' and W' are independently selected from: -OH, - CH₂OH, -CH-(OH)-CH₂-OH, -SH, hydrogen, -CH₂SH, -(CH₂)₃Si-(OEt)₃, - (CH₂)₃Si-(OMe)₃, C₁-C₁₈ alkyl, and C₁-C₁₈ alkyl-hydroxyl.

In specific embodiments the pyrrole derivative is selected from the group comprising 2-(2,5-dimethyl-1H-pyrrol-1-il)propan-1,3-diol, 1-hexyl-2,5-dimethyl-1H-pyrrole, 2,5-dimethyl-1-octadecyl-1H-pyrrole, 1,6-bis(2,5-dimethyl-1H-pyrrol-1-yl)hexane, 2,5-dimethyl-1-(3-(trimethoxysilyl)propyl)-1H-pyrrole, 3-(2,5-dimethyl-1H-pyrrol-1-yl)-N,N-dimethylpropan-1-amine, 3-(2,5-dimethyl-1H-pyrrol-1-yl)propan-1,2-diol, 2-(2,5-dimethyl-pyrrol-1-yl)ethanol, 2-(2,5-dimethyl-pyrrol-1-yl)ethanthiol, 2-(2,5-dimethylpyrrol-1-yl)propyl polyethylene glycol, 2-(2,5-dimethylpyrrol-1-yl)propyl polypropylene glycol, and O,O'-Bis-2-(2,5-dimethylpyrrol-1-yl)propyl polypropylene glycol-block-polyethylene glycol-block-polypropylene glycol.

In embodiments, the composite material according to the present invention comprises said adducts between a sp² hybridized carbon allotrope and a pyrrole derivative on the surface of a polar fiber, coating it.

Said fiber can be selected from the group comprising natural fibers, i.e. of biological and animal, plant, or mineral origin, and synthetic fibers.

Preferably, fibers of mineral origin useful in the present invention are selected from the group comprising silicates such as sepiolite, paligorskite, also known as attapulgite, and halloysite. Even more preferably, said fiber is sepiolite.

The composite materials according to the present invention, in particular those comprising graphite-based adducts, which are better described in the experimental section, show compressive strength values comparable to the control materials comprising carbon allotropes as such (this holds particularly true for the samples aged for 28 days), whilst of particular interest is the increase in the flexural strength.

This is particularly true for the composite materials comprising adducts between high surface area graphite (HSAG) and serinol pyrrole (SP), which show compressive strength values comparable to those of the control materials, even after 7 days of ageing.

Of note, when the adducts are on the surface of a fiber, such as sepiolite, the composite material comprising these coated fibers acquires both the properties of the carbon allotrope and those of the fiber itself, all the while using a significantly lower amount of carbon allotrope (up to 50%) with respect to that used in composite materials comprising the carbon allotrope itself. Therefore, coating a polar fiber of natural origin with a carbon allotrope, it is possible to obtain results comparable to those obtainable using non-functionalized carbon nanotubes, at the same time avoiding the problems connected to the use of petroleum-derived CNT, i.e. high costs, environmental/health related problems.

Third and final aspect of the present invention is a process for the preparation of the composite materials comprising a cement-based material and an adduct between sp² hybridized carbon allotrope and pyrrole derivatives, said pyrrole derivatives being optionally on the surface of a fiber, according to the above.

The inventive process comprises the following steps:
(i) preparing an aqueous suspension of the adduct, optionally being on the surface of a fiber;
(ii) adding the aqueous suspension to a suitable amount of cement;
(iii) mixing; and
(iv) solidification.

Alternatively, coated fibers are obtained by pre-mixing the fiber with the pyrrole derivative and adding the sp² carbon allotrope afterward.

The thus obtained cement-based composite material can optionally be subjected to ageing for a suitable period of time.

Optionally, reinforcing materials can be added to the mixture of cement and aqueous suspension of the adduct.

The cement-based composite material can also be by mixing a cement and a suspension of a sp² hybridized carbon allotrope, a suitable primary amine and a suitable diketone, thus obtaining the pyrrole derivative, and afterwards the adduct, *in situ* while mixing with the carbon allotrope and the cement-based mixture.

It is necessary for the mixture of cement-based material and the adduct to be prepared in the presence of oxygen. Without being bound to any theory or interpretation, it can be hypothesized that the oxygen plays a key role oxidising the pyrrole derivative,

The oxygen required to carry out the reaction can come directly from the environment in which the reaction is performed, i.e. from the air, or can advantageously derive from oxygen donor compounds added to the reactants so as to provide a consistent and precise amount of oxygen to the reaction. Examples of oxygen donors according to the present invention are: H₂O₂, MnO₂, KMnO₄, HNO₃, NaClO (sodium hypochlorite), NaClO₂ (sodium chlorite), H₂SO₄/HNO₃ (sulfo-nitric mixture), NaIO₄ (sodium metaperiodate), HIO₄, OsO₄, Pb(C₂H₃O₂)₄ (lead tetraacetate), HNO₃/HNO₂, CO₂, CO, dicumyl peroxyde, RuO₂, RuO₄, SeO₂, O₃, periodinane (Des Martin), peroxyacetic acid, iodoxybenzoic acid (IBX), nicotinamide adenine dinucleotide (NAD+), enzymes (laccase, oxidase).

The following examples are meant to further illustrate the present invention, without limiting it.

### EXPERIMENTAL SECTION

### Materials and methods

Pyrrole derivatives have been prepared according to V. Barbera, et al. "Facile and sustainable functionalization of graphene layers with pyrrole compounds", Pure Appl. Chem., 2018, 90(2), 253-270.

The graphite used was Synthetic Graphite 8427, obtained from Asbury Graphite Mills Inc., with a minimum carbon amount of 99.8% by weight and surface area of 330 m²/g (high surface area graphite, HSAG).

The multi-walled carbon nanotubes (MWCNT) used are NC7000 series from NANOCYL Inc.

The graphene nanoplatelets were Graphene nanoplatelets powder, from Aldrich, characterized by Raman D/G and D/D' of 0.28 and 5.0.

One carbon black used was Carbon Black N326 (CBN326; Cabot), having the following characteristics: mean particles diameter of 30 nm, surface area of 77 m²/g (as measured by nitrogen adsorption), DBP adsorption of 85 mL/100 g.

Another carbon black used was Carbon Black N234 (CBN234; Cabot), having the following characteristics: Iodine Absorption Number, g/kg= 120, surface area of 112 m²/g (as measured by nitrogen adsorption), DBP adsorption of 125 mL/100 g.

The sepiolite used was Pangel S9 and Pangel B5, purified grade, from Tolsa, Spain.

The cement-based material used was portland cement CEM I 42.5R from Buzzi Unicem.

### Examples 1-8: preparation of adducts between pyrrole derivatives and sp² hybridized carbon allotropes.

### Example 1: Adduct between high surface area graphite (HSAG) and 2-(2,5-dimethyl-1H-pyrrol-1-yl)propan-1,3-diol (SP) - HSAG-SP.

In a 50 mL flask, equipped with magnetic stirrer, high surface area graphite (200 mg, 2.8 mmol) and acetone (15 mL) were sequentially added. The thus obtained suspension was sonicated for 15 minutes using a 2L ultrasound water bath. Afterwards, a solution of 2-(2,5-dimethyl-1H-pyrrol-1-yl)propan-1,3-diol (10% mol/mol, 0.28 mmol) in acetone (25 mL) is added to the suspension. The mixture was then sonicated for 15 minutes. Afterwards, the acetone was removed under reduced pressure using a rotavapor. The black powder thus obtained was placed in a 100 mL flask and heated to 180°C for 2 h. The adduct was then transferred in a Büchner filter and repeatedly washed with acetone (3 X 100 mL).

### Example 2: Adduct between graphene nanoplatelets (GnP) and 2-(2,5-dimethyl-1H-pyrrol-1-yl)propan-1,3-diol (SP) - GnP-SP.

GnP-SP was prepared with the procedure described in example 1, using graphene nanoplatelets instead of HSAG.

### Example 3: Adduct between multi-walled carbon nanotubes (CNT) and 2-(2,5-dimethyl-1H-pyrrol-1-yl)propan-1,3-diol (SP) - CNT-SP.

CNT-SP was prepared with the procedure described in example 1, using multi-walled carbon nanotubes instead of HSAG.

### Example 4: Adduct between high surface area graphite (HSAG) and 1-hexyl-2,5-dimethyl-1H-pyrrole (EP) - HSAG-EP.

HSAG-EP was prepared with the procedure described in example 1, using 1-hexyl-2,5-dimethyl-1H-pyrrole instead of SP.

### Example 5: Adduct between high surface area graphite (HSAG) and 2,5-dimethyl-1-octadecyl-1H-pyrrole (OP) - HSAG-OP.

HSAG-OP was prepared with the procedure described in example 1, using 2,5-dimethyl-1-octadecyl-1H-pyrrole instead of SP.

### Example 6: Adduct between carbon black (CBN326) and 2-(2,5-dimethyl-1H-pyrrol-1-yl)propan-1,3-diol (SP) - CBN326-SP.

CBN326-SP was prepared with the procedure described in example 1, using carbon black CBN326 instead of HSAG.

### Example 7: Adduct between carbon black (CBN234) and 2-(2,5-dimethyl-1H-pyrrol-1-yl)propan-1,3-diol (SP) - CBN234-SP.

CBN234-SP was prepared with the procedure described in example 1, using carbon black CBN234 instead of HSAG.

### Example 8: Adduct between high surface area graphite (HSAG) and 3-(2,5-dimethyl-1H-pyrrol-1-yl)propan-1,2-diol (iSP) - HSAG-iSP.

HSAG-iSP was prepared with the procedure described in example 1, using 3-(2,5-dimethyl-1H-pyrrol-1-yl)propan-1,2-diol instead of SP

### Example 9 HSAG-SP coated sepiolite

In a 100 mL beaker, HSAG-SP (1 g), obtained according to the procedure described in example 1, and water (100 mL) were sequentially added. The suspension was sonicated for 15 minutes with a tip sonicator. Afterwards, the HSAG-SP suspension in water was poured into a 250 mL beaker containing 1 g of sepiolite and 100 mL of water. The thus obtained suspension of HSAG-SP and sepiolite in water was stirred for 30 minutes at room temperature and then at 50°C for 30 minutes. The mixture was then centrifuged at 9000 rpm for 30 minutes. The solid precipitate was removed and hoven dried.

### Example 10 HSAG-iSP coated sepiolite

HSAG-iSP coated sepiolite was obtained following the procedure described in example 9, using HSAG-iSP obtained in ex. 8 instead of HSAG-SP.

### Examples 11-19: aqueous suspensions

### Example 11: non-functionalized carbon nanotube (CNT) aqueous suspension - (concentration: 1 mg/mL)

Carbon nanotubes (250 mg) and water (250 mL) were sequentially added in a 1000 mL beaker. The obtained suspension was sonicated for 60 minutes in a 2 L ultrasound bath.

### Example 12: non-functionalized carbon nanotube (CNT) aqueous suspension - (concentration: 2 mg/mL)

Carbon nanotubes (500 mg) and water (250 mL) were sequentially added in a 1000 mL beaker. The obtained suspension was sonicated for 60 minutes in a 2 L ultrasound bath.

### Example 13: aqueous suspension of the adduct between multi-walled carbon nanotubes and 2-(2,5-dimethyl-1H-pyrrol-1-yl)propan-1,3-diol (CNT-SP) - (concentration: 1 mg/mL)

The CNT-SP aqueous suspension was prepared with the procedure described in example 11, using CNT-SP obtained in example 3 instead of non-functionalized CNT.

### Example 14: aqueous suspension of the adduct between multi-walled carbon nanotubes and 2-(2,5-dimethyl-1H-pyrrol-1-yl)propan-1,3-diol (CNT-SP) - (concentration: 2 mg/mL)

The CNT-SP aqueous suspension was prepared with the procedure described in example 12, using CNT-SP obtained in example 3 instead of non-functionalized CNT.

### Example 15: aqueous suspension of the adduct between graphene nanoplatelets and 2-(2,5-dimethyl-1H-pyrrol-1-yl)propan-1,3-diol (GnP-SP) - (concentration: 1 mg/mL)

The GnP-SP aqueous suspension was prepared with the procedure described in example 11, using GnP-SP obtained in example 2 instead of non-functionalized CNT.

### Example 16: aqueous suspension of the adduct between high surface area graphite and 2-(2,5-dimethyl-1H-pyrrol-1-yl)propan-1,3-diol (HSAG-SP) - (concentration: 1 mg/mL)

The CNT-SP aqueous suspension was prepared with the procedure described in example 11, using HSAG-SP obtained in example 1 instead of non-functionalized CNT.

### Example 17: aqueous suspension of the HSAG-SP coated sepiolite (S/HSAG-SP) - (concentration: 1 mg/mL)

The S/HSAG-SP aqueous suspension was prepared with the procedure described in example 11, using S/HSAG-SP obtained in example 9 instead of non-functionalized CNT.

### Example 18: aqueous suspension of the adduct between high surface area graphite and 3-(2,5-dimethyl-1H-pyrrol-1-yl)propan-1,2-diol (HSAG-iSP) - (concentration: 1 mg/mL)

The HSAG-iSP aqueous suspension was prepared with the procedure described in example 11, using HSAG-iSP obtained in example 8 instead of non-functionalized CNT.

### Example 19: aqueous suspension of the HSAG-iSP coated sepiolite (S/HSAG-iSP) - (concentration: 1 mg/mL)

The S/HSAG-iSP aqueous suspension was prepared with the procedure described in example 11, using S/HSAG-iSP obtained in example 10 instead of non-functionalized CNT.

### Examples 20-29: composite materials comprising sp² hybridized carbon allotropes

### Example 20 (comparison): cement-based composite material (C1)

2447 g of cement and 1223 g of distilled water were mixed in a mortar mixer, mixing according to the procedure described in UNI EN 196-1, i.e. mixing at low speed (140 rpm) for 60 seconds, then increasing the speed to 285 rpm and keeping it for 30 seconds; stopping the mixer for 60 seconds and removing any lump of material from the container walls; then restarting the mixer at the maximum speed for 60 seconds.

The fluid cement paste thus obtained was poured into three metal frameworks having three cavities of 160x40x40 mm. after 24 hours, the solidified samples were removed from the frameworks and kept in aging chamber (100% relative humidity, 20°C).

### Example 21 (comparison): cement-based composite material comprising non-functionalized carbon nanotubes (C2)

The procedure of example 20 was repeated using 2444 g of cement and 1226 g of a suspension of 2.45 g of non-functionalized carbon nanotubes in 1223 g of water.

### Example 22 (comparison): cement-based composite material comprising non-functionalized carbon nanotubes (C3)

The procedure of example 20 was repeated using 2442 g of cement and 1228 g of a suspension of 4.89 g of non-functionalized carbon nanotubes in 1223 g of water.

### Example 23 (invention): cement-based composite material comprising CNT-SP (11)

The procedure of example 20 was repeated using 2444 g of cement and 1226 g of a suspension of 2.45 g of CNT-SP in 1223 g of water.

### Example 24 (invention): cement-based composite material comprising non-functionalized carbon nanotubes (12)

The procedure of example 20 was repeated using 2442 g of cement and 1228 g of a suspension of 4.89 g of CNT-SP in 1223 g of water.

### Example 25 (invention): cement-based composite material comprising GnP-SP (13)

The procedure of example 20 was repeated using 2444 g of cement and 1226 g of a suspension of 2.45 g of GnP-SP in 1223 g of water.

### Example 26 (invention): cement-based composite material comprising HSAG-SP (14)

The procedure of example 20 was repeated using 2444 g of cement and 1226 g of a suspension of 2.45 g of HSAG-SP in 1223 g of water.

### Example 27 (invention): cement-based composite material comprising S/HSAG-SP (15)

The procedure of example 20 was repeated using 2444 g of cement and 1226 g of a suspension of 2.5 g of S/HSAG-SP in 1223.3 g of water.

### Example 28 (invention): cement-based composite material comprising HSAG-iSP (16)

The procedure of example 20 was repeated using 2444 g of cement and 1226 g of a suspension of 2.45 g of HSAG-iSP in 1223 g of water.

### Example 29 (invention): cement-based composite material comprising S/HSAG-iSP (17)

The procedure of example 16 was repeated using 2444 g of cement and 1226 g of a suspension of 2.5 g of S/HSAG-iSP in 1223.3 g of water.

### Example 30: characterization of the composite materials

The composition of the composite materials obtained in examples 16-23 is summarized in Table 1 below.

**TABLE 1**

| | | | **Reinforcing filler** | | |
|---|---|---|---|---|---|
| **Sample** | **Cement based material (g)** | **Water (g)** | **Kind and amounts (g)** | **Weight % with respect to cement-based material** | **Weight % with respect to water** |
| **C1** | 2446.6 | 1223.3 | - | - | - |
| **C2** | 2444.2 | 1223.3 | CNT (2.5) | 0.1 | 0.2 |
| **C3** | 2441.7 | 1223.3 | CNT (4.9) | 0.2 | 0.4 |
| **11** | 2444.2 | 1223.3 | CNT-SP (2.5) | 0.1 | 0.2 |
| **12** | 2441.7 | 1223.3 | CNT-SP (4.9) | 0.2 | 0.4 |
| **13** | 2444.2 | 1223.3 | GnP-SP (2.5) | 0.1 | 0.2 |
| **14** | 2444.2 | 1223.3 | HSAG-SP (2.5) | 0.1 | 0.2 |
| **15** | 2444.2 | 1223.3 | S/HSAG-SP (2.5) | 0.1 | 0.2 |

| | |
|---|---|
| • C1 (comparison): | cement-based material only |
| • C2-C3 (comparison): | cement-based material + non-functionalized CNT |
| • 11-12 (invention): | cement-based material + adduct CNT-SP |
| • I3 (invention): | cement-based material + adduct GnP-SP |
| • I4 (invention): | cement-based material + adduct HSAG-SP |
| • I5 (invention): | cement-based material + HSAG-SP coated sepiolite |

The composite materials workability was measured on the fluid cement paste pouring it in an open truncated-conical form of bottom diameter of 100 mm, upper diameter of 70 mm and height of 60 mm. The form was then lifted to let the paste flow and the spreading diameter was measured in two perpendicular directions. 15 strokes were impressed on the shock board and the diameter was measured again.

During ageing, specifically after 1, 7 and 28 days, the finished composite materials were subjected to electrical conductivity, flexural strength and compressive strength measurements.

Electrical conductivity was measured using a conductivity meter connected to two copper plates and resting on two long and parallel surfaces of each sample. The conductance value (C, µS) detected by the instrument was converted in electrical resistivity (ρ, Ω·m) by the equation: ρ = 0.16/(10⁶·C).

The flexural strength was measured with the three-point bending flexural test, measuring the force (F_{f}, kN) required to bring the sample to the point of flexural break, and calculating the flexural strength (σ_{f}, MPa) via the equation: σ_{f} = 3·10³·F_{f}·L/(2·b³) wherein L is the support span (100 mm) and b is the sample square section (40 mm).

The compressive strength was measured on the two fragments obtained from the flexural test, measuring the force (F_{c}, in kN) required to ring the sample to the point of compression break and calculating the compressive strength (σ_{c}, in MPa) via the equation: σ_{c} = 10³·Fc/b².

The results obtained are collected in Tables 2-3 below.

**TABLE 2**

| | | **Resistivity (Ohm*m)** | | |
|---|---|---|---|---|
| **Sample** | **Workability (mm)** | **Day 1** | **Day 7** | **Day 28** |
| **C1** | 290 | 7.0 | 18.4 | 20.8 |
| **C2** | 303 | 7.1 | 19.2 | 19.4 |
| **C3** | 295 | 7.6 | 19.4 | 16.5 |
| **11** | 260 | 7.8 | 16.3 | 15.8 |
| **12** | 243 | 11.6 | 12.8 | 11.2 |
| **13** | 298 | 10.4 | 19.2 | 18.8 |
| **14** | 290 | 9.0 | 20.1 | 18.7 |
| **15** | 280 | 14.7 | 16.0 | 18.9 |

**TABLE 3**

| | **Compressive strength (MPa)** | | | | **Flexural strength (MPa)** | |
|---|---|---|---|---|---|---|
| **Sample** | **Day 7** | **Error** | **Day 28** | **Error** | **Day 28** | **Error** |
| **C1** | 28.7 | 0.5 | 44.6 | 1.1 | 4.9 | 0.3 |
| **C2** | 25.7 | 0.3 | 37.1 | 1.4 | 5.1 | 0.7 |
| **C3** | 23.2 | 0.2 | 34.5 | 0.9 | 6.4 | 0.5 |
| **11** | 23.0 | 0.4 | 34.1 | 0.9 | 6.8 | 0.5 |
| **12** | 24.9 | 0.3 | 36.8 | 1.0 | 8.5 | 0.4 |
| **13** | 21.7 | 0.6 | 36.7 | 2.2 | 7.7 | 0.4 |
| **14** | 30.9 | 0.9 | 43.2 | 1.4 | 8.1 | 0.4 |
| **15** | 21.7 | 0.8 | 35.1 | 2.1 | 6.7 | 0.5 |

| | |
|---|---|
| • C1 (comparison): | cement-based material only |
| • C2-C3 (comparison): : | cement-based material + non-functionalized CNT |
| • 11-12 (invention): | cement-based material + adduct CNT-SP |
| • I3 (invention): | cement-based material + adduct GrP-SP |
| • I4 (invention): | cement-based material + adduct HSAG-SP |
| • I5 (invention): | cement-based material + HSAG-SP coated sepiolite |

Having regard the samples comprising CNT, C2 is comparable to 11 and C3 to I2. The results show that the four samples comprising CNT have compressive strength values quite similar to the cement-based material alone (C1), both after 7 and 28 days, while having higher flexural strength values, in particular for samples comprising SP functionalized CNT (11-12).

The samples comprising graphite/graphene, 11-15, should be compared to C1. The results show that these samples have compressive strength values quite similar to the cement-based material alone (C1), in particular after 28 days, while having higher flexural strength values. This holds particularly true for the sample comprising HSAG-SP showing a compressive strength value comparable/higher also after 7 days of ageing.

Of note, the sample comprising HSAG-SP coated sepiolite shows results similar to the sample comprising CNT. Therefore, coating a polar fiber of natural origin with graphite, it is possible to obtain results comparable to those obtainable using carbon nanotubes, at the same time avoiding the problems connected to the use of petroleum-derived CNT, i.e. high costs, environmental/health related problems.

## Claims

1. Composite material comprising:
a) a cement material; and
b) an adduct between an sp² hybridized carbon allotrope and a pyrrole derivative, wherein said pyrrole derivative is represented by formula (I) 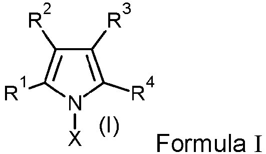
wherein R₁, R₂, R₃, and R₄ are independently selected from the group consisting of: hydrogen, linear or branched C₁-C₂₂ alkyl, linear or branched C₂-C₂₂ alkenyl or alkynyl, aryl, linear or branched C₁-C₂₂ alkyl-aryl, linear or branched C₂-C₂₂ alkenyl-aryl, linear or branched C₂-C₂₂ alkynyl-aryl, and heteroaryl; and
X is selected from the group consisting of: 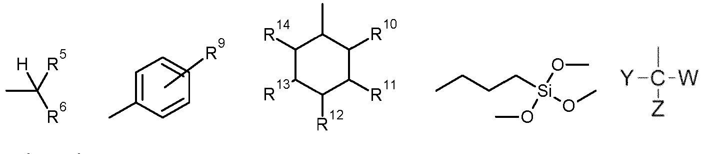 wherein:
R₅ and R₆ are independently selected from the group consisting of: hydrogen, C₁-C₁₈ alkyl, linear or branched C₂-C₁₈ alkenyl or alkynyl, C₁-C₁₈ alkyl-hydroxyl, aryl, linear or branched C₁-C₂₂ alkyl-aryl, linear or branched C₂-C₂₂ alkenyl-aryl, linear or branched C₂-C₂₂ alkynyl-aryl, and heteroaryl;
or R₅ and R₆ are independently: 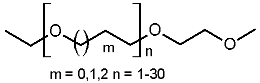 wherein if only one between R₅ or R₆ is 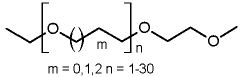 then the other one is selected from the group consisting of: hydrogen, C₁-C₁₈ alkyl, and linear or branched C₂-C₁₈ alkenyl or alkynyl;
or R₅ and R₆ are independently selected from the group consisting of: hydrogen and one of the following formulae 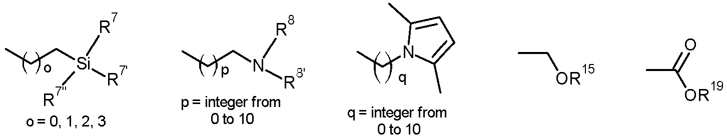 wherein
R₇, R_{7'}, R_{7"}, R₈ and R_{8'} are independently selected from the group consisting of: C₁-C₄ alkyl, and C₁-C₄ oxy-alkyl;
R₁₅ is selected from the group consisting of: hydrogen, linear or branched C₁-C₂₂ alkyl, linear or branched C₂-C₂₂ alkenyl or alkynyl, aryl, linear or branched C₁-C₂₂ alkyl-aryl, linear or branched C₂-C₂₂ alkenyl-aryl, linear or branched C₂-C₂₂ alkynyl-aryl, linear or branched C₂-C₂₂ acyl-alkyl, linear or branched C₃₋C₂₂ acyl-alkenyl or acyl-alkynyl, acyl-aryl, acyl-alky-aryl with linear or branched C₂-C₂₂ acyl-alkyl, acyl-alkenyl-aryl with linear or branched C₃₋C₂₂ acyl-alkenyl, acyl-alkynyl-aryl with linear or branched C₃₋C₂₂ acyl-alkynyl, and heteroaryl; and
R₁₉ is selected from the group consisting of: hydrogen, linear or branched C₁-C₂₂ alkyl, linear or branched C₂-C₂₂ alkenyl or alkynyl, aryl, linear or branched C₁-C₂₂ alkyl-aryl, linear or branched C₂-C₂₂ alkenyl-aryl, linear or branched C₂-C₂₂ alkynyl-aryl, and heteroaryl;
R₉ is selected from the group consisting of: hydrogen, alkyl, aryl, benzyl, amine, alkyl-amine, aryl-amine, benzyl-amine, and amino-aryl;
R₁₀, R₁₁, R₁₂, R₁₃ and R₁₄ are independently selected from the group consisting of: hydrogen, C₁-C₁₈ alkyl, linear or branched C₂-C₁₈ alkenyl or alkynyl, and 1-(4-aminocyclohexyl)methylene;
and Y, Z and W are independently selected from a first group consisting of: hydrogen, C₁-C₁₈ alkyl, linear or branched C₂-C₁₈ alkenyl or alkynyl, or from a second group consisting of the following formulae: 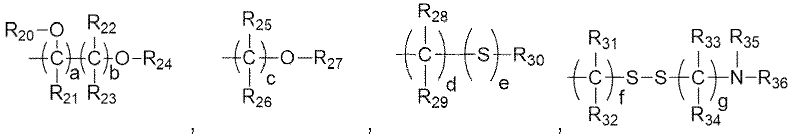
wherein R₂₀, R₂₁, R₂₂, R₂₃, R₂₄, R₂₅, R₂₆, R₂₇, R₂₈, R₂₉, R₃₀, R₃₁, R₃₂, R₃₃, R₃₄, R₃₅ and R₃₆ are independently selected from the group consisting of: hydrogen, C₁-C₁₈ alkyl, linear or branched C₂-C₁₈ alkenyl or alkynyl, aryl, linear or branched C₁-C₂₂ alkyl-aryl, linear or branched C₂-C₂₂ alkenyl-aryl, linear or branched C₂-C₂₂ alkynyl-aryl, heteroaryl, and carboxyl; e is an integer of from 1 to 4, and a, b, c, d, f, and g are, independently from one another, an integer of from 1 to 12;
and wherein at least one from Y, W, and Z is selected in said second group.

2. The composite material according to claim 1, wherein said cement material comprises portland cement or is portland cement.

3. The composite material according to claim 2, wherein said cement further comprises at least one of alumina, calcium oxide, silicon oxide, iron oxide, or mixtures thereof.

4. The composite material according to any one of claims 1-3, further comprising reinforcing fibers.

5. The composite material according to any one of claims 1-4, wherein the adduct's amount, with respect to the cement material, expressed as weight %, is between 0.001 and 20.

6. The composite material according to any one of claims 1-5, wherein said sp² hybridized carbon allotrope is selected from the group consisting of graphene, graphite, nanographite, fullerene, nano-toroids, nano-cones, graphene nanoribbons, graphene nanoplatelets, single or multi-walled carbon nanotubes, and carbon black.

7. The composite material according to any one of claims 1-6, wherein in said pyrrole derivative of formula (I) 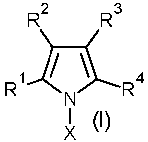
R₁, R₂, R₃, and R₄ are independently selected from the group consisting of: hydrogen, linear or branched C₁-C₂₂ alkyl, linear or branched C₂-C₂₂ alkenyl or alkynyl, aryl, linear or branched C₁-C₂₂ alkyl-aryl, linear or branched C₂-C₂₂ alkenyl-aryl, linear or branched C₂-C₂₂ alkynyl-aryl, and heteroaryl;
and X is represented by: 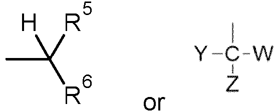 wherein:
R₅ and R₆ are independently selected from the group consisting of: hydrogen, C₁-C₁₈ alkyl, linear or branched C₂-C₁₈ alkenyl or alkynyl, C₁-C₁₈ alkyl-hydroxyl, aryl, linear or branched C₁-C₂₂ alkyl-aryl, linear or branched C₂-C₂₂ alkenyl-aryl, linear or branched C₂-C₂₂ alkynyl-aryl, and heteroaryl;
or R₅ and R₆ are independently selected from the group consisting of: hydrogen and one of the following formulae 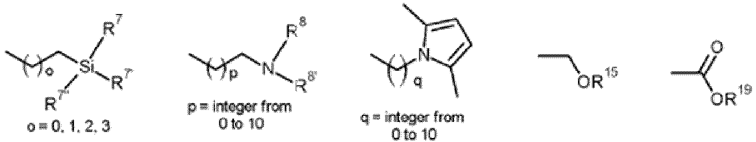 wherein
R₇, R_{7'}, R_{7"}, R₈ and R_{8'} are independently selected from the group consisting of: C₁-C₄ alkyl, and C₁-C₄ oxy-alkyl;
R₁₅ is selected from the group consisting of: hydrogen, linear or branched C₁-C₂₂ alkyl, linear or branched C₂-C₂₂ alkenyl or alkynyl, aryl, linear or branched C₁-C₂₂ alkyl-aryl, linear or branched C₂-C₂₂ alkenyl-aryl, linear or branched C₂-C₂₂ alkynyl-aryl, linear or branched C₂-C₂₂ acyl-alkyl, linear or branched C₃₋C₂₂ acyl-alkenyl or acyl-alkynyl, acyl-aryl, acyl-alky-aryl with linear or branched C₂-C₂₂ acyl-alkyl, acyl-alkenyl-aryl with linear or branched C₃₋C₂₂ acyl-alkenyl, acyl-alkynyl-aryl with linear or branched C₃₋C₂₂ acyl-alkynyl, and heteroaryl; and
R₁₉ is selected from the group consisting of: hydrogen, linear or branched C₁-C₂₂ alkyl, linear or branched C₂-C₂₂ alkenyl or alkynyl, aryl, linear or branched C₁-C₂₂ alkyl-aryl, linear or branched C₂-C₂₂ alkenyl-aryl, linear or branched C₂-C₂₂ alkynyl-aryl, and heteroaryl;
R₉ is selected from the group consisting of: hydrogen, alkyl, aryl, benzyl, amine, alkyl-amine, aryl-amine, benzyl-amine, and amino-aryl;
R₁₀, R₁₁, R₁₂, R₁₃ and R₁₄ are independently selected from the group consisting of: hydrogen, C₁-C₁₈ alkyl, linear or branched C₂-C₁₈ alkenyl or alkynyl, and 1-(4-aminocyclohexyl)methylene;
and Y, Z and W are independently selected from a first group consisting of: hydrogen, C₁-C₁₈ alkyl, linear or branched C₂-C₁₈ alkenyl or alkynyl, or from a second group consisting of the following formulae: 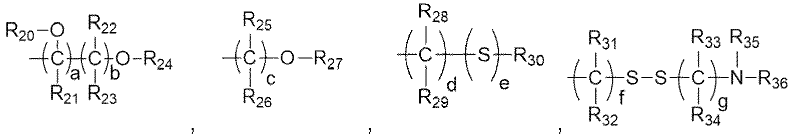
wherein R₂₀, R₂₁, R₂₂, R₂₃, R₂₄, R₂₅, R₂₆, R₂₇, R₂₈, R₂₉, R₃₀, R₃₁, R₃₂, R₃₃, R₃₄, R₃₅, and R₃₆ are independently selected from the group consisting of: hydrogen, C₁-C₁₈ alkyl, linear or branched C₂-C₁₈ alkenyl or alkynyl, aryl, linear or branched C₁-C₂₂ alkyl-aryl, linear or branched C₂-C₂₂ alkenyl-aryl, linear or branched C₂-C₂₂ alkynyl-aryl, heteroaryl, and carboxyl; e is an integer of from 1 to 4, and a, b, c, d, f, and g are, independently from one another, an integer of from 1 to 12;
and wherein at least one from Y, W, and Z is selected in said second group.

8. The composite material according to claim 7, wherein X is represented by: 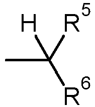 wherein said R₅ and R₆ groups are independently selected from the group consisting of: hydrogen, C₁-C₁₈ alkyl, and C₁-C₁₈ alkyl-hydroxyl.

9. The composite material according to any one of claims 4-8, wherein said adduct between a sp² hybridized carbon allotrope and a pyrrole derivative is on the surface of a fiber.

10. The composite material according to claim 9, wherein said fiber is a polar mineral or synthetic fiber.

11. The composite material according to claim 10, wherein said polar mineral fiber is selected from the group comprising silicates, such as sepiolite, palygorskite, attapulgite, and halloysite.

12. The composite material according to claim 11, wherein said polar mineral fiber is sepiolite.

13. Process for the preparation of the composite material as defined in any one or more of claims from 1 to 8 said process comprising the following steps:
(i) preparing an aqueous suspension of the adduct, optionally being on the surface of a fiber;
(ii) adding the aqueous suspension to a suitable amount of cement;
(iii) mixing; and
(iv) solidifying the mixture.

14. Process for the preparation of the composite material according to claim 13, wherein said fiber is a polar fiber.

## Patentansprüche

1. Verbundwerkstoff, umfassend:
a) ein Zementmaterial; und
b) ein Addukt zwischen einem sp²-hybridisierten Kohlenstoffallotrop und einem Pyrrolderivat, wobei das genannte Pyrrolderivat durch die Formel (I) dargestellt wird 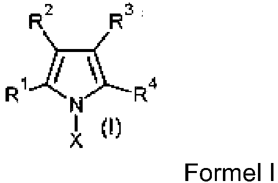
wobei R₁, R₂, R₃ und R₄ unabhängig voneinander ausgewählt sind aus der Gruppe, bestehend aus: Wasserstoff, linearem oder verzweigtem C₁-C₂₂-Alkyl, linearem oder verzweigtem C₂-C₂₂-Alkenyl oder -Alkinyl, Aryl, linearem oder verzweigtem C₁-C₂₂-Alkyl-Aryl, linearem oder verzweigtem C₂-C₂₂-Alkenyl-Aryl, linearem oder verzweigtem C₂-C₂₂-Alkinyl-Aryl und Heteroaryl; und
X ausgewählt ist aus der Gruppe, bestehend aus: 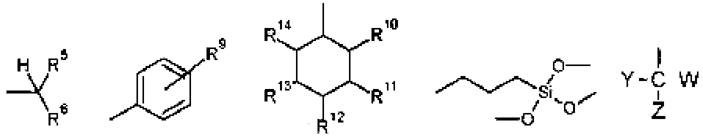 wobei:
R₅ und R₆ unabhängig voneinander ausgewählt sind aus der Gruppe, bestehend aus: Wasserstoff, C₁-C₁₈-Alkyl, linearem oder verzweigtem C₂-C₁₈-Alkenyl oder -Alkinyl, C₁-C₁₈-Alkyl-Hydroxyl, Aryl, linearem oder verzweigtem C₁-C₂₂-Alkyl-Aryl, linearem oder verzweigtem C₂-C₂₂-Alkenyl-Aryl, linearem oder verzweigtem C₂-C₂₂-Alkinyl-Aryl und Heteroaryl;
oder R₅ und R₆ unabhängig voneinander sind: 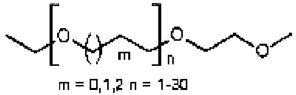 wobei, wenn nur einer davon R₅ und R₆ ist 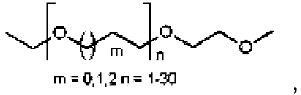 dann ist der andere ausgewählt aus der Gruppe, bestehend aus: Wasserstoff, C₁-C₁₈-Alkyl und linearem oder verzweigtem C₂-C₁₈-Alkenyl oder -Alkinyl;
oder R₅ und R₆ unabhängig voneinander ausgewählt sind aus der Gruppe, bestehend aus: Wasserstoff und einer der folgenden Formeln 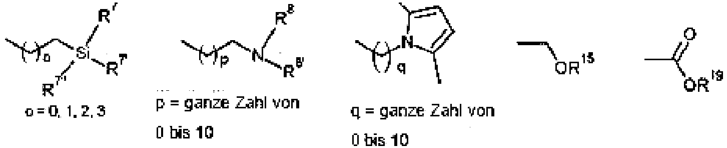 wobei
R₇, R_{7'}, R_{7"}, R₈ und R_{8'} unabhängig voneinander ausgewählt sind aus der Gruppe, bestehend aus: C₁-C₄-Alkyl und C₁-C₄-Oxyalkyl;
R₁₅ ausgewählt ist aus der Gruppe, bestehend aus: Wasserstoff, linearem oder verzweigtem C₁-C₂₂-Alkyl, linearem oder verzweigtem C₂-C₂₂-Alkenyl oder -Alkinyl, Aryl, linearem oder verzweigtem C₁-C₂₂-Alkyl-Aryl, linearem oder verzweigtem C₂-C₂₂-Alkenyl-Aryl, linearem oder verzweigtem C₂-C₂₂-Alkinyl-Aryl, linearem oder verzweigtem C₂-C₂₂-Acyl-Alkyl, linearem oder verzweigtem C₃-C₂₂-Acyl-Alkenyl oder -Acyl-Alkinyl, Acyl-Aryl, Acyl-Alky-Aryl mit linearem oder verzweigtem C₂-C₂₂-Acyl-Alkyl, Acyl-Alkenyl-Aryl mit linearem oder verzweigtem C₃-C₂₂-Acyl-Alkenyl, Acyl-Alkinyl-Aryl mit linearem oder verzweigtem C₃-C₂₂-Acyl-Alkinyl und Heteroaryl; und
R₁₉ ausgewählt ist aus der Gruppe, bestehend aus: Wasserstoff, linearem oder verzweigtem C₁-C₂₂-Alkyl, linearem oder verzweigtem C₂-C₂₂-Alkenyl oder -Alkinyl, Aryl, linearem oder verzweigtem C₁-C₂₂-Alkyl-Aryl, linearem oder verzweigtem C₂-C₂₂-Alkenyl-Aryl, linearem oder verzweigtem C₂-C₂₂-Alkinyl-Aryl und Heteroaryl;
R₉ ausgewählt ist aus der Gruppe, bestehend aus: Wasserstoff, Alkyl, Aryl, Benzyl, Amin, Alkylamin, Arylamin, Benzylamin und Aminoaryl;
R₁₀, R₁₁, R₁₂, R₁₃ und R₁₄ unabhängig voneinander ausgewählt sind aus der Gruppe, bestehend aus: Wasserstoff, C₁-C₁₈-Alkyl, linearem oder verzweigtem C₂-C₁₈-Alkenyl oder -Alkinyl und 1-(4-Aminocyclohexyl)methylen;
und Y, Z und W unabhängig voneinander ausgewählt sind aus einer ersten Gruppe, bestehend aus: Wasserstoff, C₁-C₁₈-Alkyl, linearem oder verzweigtem C₂-C₁₈-Alkenyl oder -Alkinyl, oder aus einer zweiten Gruppe, bestehend aus den folgenden Formeln: 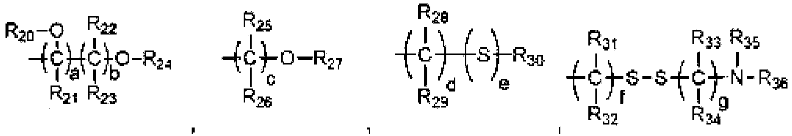
wobei R₂₀, R₂₁, R₂₂, R₂₃, R₂₄, R₂₅, R₂₆, R₂₇, R₂₈, R₂₉, R₃₀, R₃₁, R₃₂, R₃₃, R₃₄, R₃₅ und R₃₆ unabhängig voneinander ausgewählt sind aus der Gruppe, bestehend aus: Wasserstoff, C₁-C₁₈-Alkyl, linearem oder verzweigtem C₂-C₁₈-Alkenyl oder - Alkinyl, Aryl, linearem oder verzweigtem C₁-C₂₂-Alkyl-Aryl, linearem oder verzweigtem C₂-C₂₂-Alkenyl-Aryl, linearem oder verzweigtem C₂-C₂₂-Alkinyl-Aryl, Heteroaryl und Carboxyl; e eine ganze Zahl von 1 bis 4 ist und a, b, c, d, f und g unabhängig voneinander eine ganze Zahl von 1 bis 12 sind;
und wobei mindestens eines von Y, W und Z ausgewählt ist aus der genannten zweiten Gruppe.

2. Verbundwerkstoff gemäß Anspruch 1, wobei das genannte Zementmaterial Portlandzement umfasst oder Portlandzement ist.

3. Verbundwerkstoff gemäß Anspruch 2, wobei der genannte Zement ferner mindestens eines von Aluminiumoxid, Calciumoxid, Siliciumoxid, Eisenoxid oder Gemischen davon umfasst.

4. Verbundwerkstoff gemäß einem beliebigen der Ansprüche 1 bis 3, ferner umfassend Verstärkungsfasern.

5. Verbundwerkstoff gemäß einem beliebigen der Ansprüche 1 bis 4, wobei die Menge des Addukts in Bezug auf das Zementmaterial, ausgedrückt in Gewichtsprozent, zwischen 0,001 und 20 liegt.

6. Verbundwerkstoff gemäß einem beliebigen der Ansprüche 1 bis 5, wobei das genannte sp²-hybridisierte Kohlenstoffallotrop ausgewählt ist aus der Gruppe, bestehend aus Graphen, Graphit, Nanographit, Fulleren, Nanotoroiden, Nanokegeln, Graphen-Nanobändern, Graphen-Nanoplättchen, ein- oder mehrwandigen Kohlenstoffnanoröhren und Ruß.

7. Verbundwerkstoff gemäß einem beliebigen der Ansprüche 1 bis 6, wobei in dem genannten Pyrrolderivat der Formel (I) 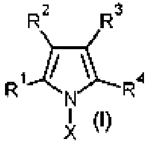
R₁, R₂, R₃ und R₄ unabhängig voneinander ausgewählt sind aus der Gruppe, bestehend aus: Wasserstoff, linearem oder verzweigtem C₁-C₂₂-Alkyl, linearem oder verzweigtem C₂-C₂₂-Alkenyl oder -Alkinyl, Aryl, linearem oder verzweigtem C₁-C₂₂-Alkyl-Aryl, linearem oder verzweigtem C₂-C₂₂-Alkenyl-Aryl, linearem oder verzweigtem C₂-C₂₂-Alkinyl-Aryl und Heteroaryl;
und X dargestellt wird durch: 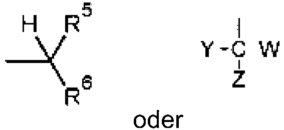 wobei:
R₅ und R₆ unabhängig voneinander ausgewählt sind aus der Gruppe, bestehend aus: Wasserstoff, C₁-C₁₈-Alkyl, linearem oder verzweigtem C₂-C₁₈-Alkenyl oder -Alkinyl, C₁-C₁₈-Alkyl-Hydroxyl, Aryl, linearem oder verzweigtem C₁-C₂₂-Alkyl-Aryl, linearem oder verzweigtem C₂-C₂₂-Alkenyl-Aryl, linearem oder verzweigtem C₂-C₂₂-Alkinyl-Aryl und Heteroaryl;
oder R₅ und R₆ unabhängig voneinander ausgewählt sind aus der Gruppe, bestehend aus Wasserstoff und einer der folgenden Formeln 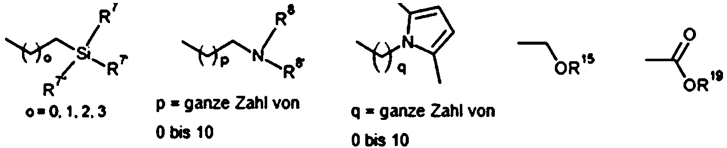 wobei
R₇, R_{7'}, R_{7"}, R₈ und R_{8'} unabhängig voneinander ausgewählt sind aus der Gruppe, bestehend aus: C₁-C₄-Alkyl und C₁-C₄-Oxyalkyl;
R₁₅ ausgewählt ist aus der Gruppe, bestehend aus: Wasserstoff, linearem oder verzweigtem C₁-C₂₂-Alkyl, linearem oder verzweigtem C₂-C₂₂-Alkenyl oder -Alkinyl, Aryl, linearem oder verzweigtem C₁-C₂₂-Alkyl-Aryl, linearem oder verzweigtem C₂-C₂₂-Alkenyl-Aryl, linearem oder verzweigtem C₂-C₂₂-Alkinyl-Aryl, linearem oder verzweigtem C₂-C₂₂-Acyl-Alkyl, linearem oder verzweigtem C₃-C₂₂-Acyl-Alkenyl oder -Acyl-Alkinyl, Acyl-Aryl, Acyl-Alky-Aryl mit linearem oder verzweigtem C₂-C₂₂-Acyl-Alkyl, Acyl-Alkenyl-Aryl mit linearem oder verzweigtem C₃-C₂₂-Acyl-Alkenyl, Acyl-Alkinyl-Aryl mit linearem oder verzweigtem C₃-C₂₂-Acyl-Alkinyl und Heteroaryl; und
R₁₉ ausgewählt ist aus der Gruppe, bestehend aus: Wasserstoff, linearem oder verzweigtem C₁-C₂₂-Alkyl, linearem oder verzweigtem C₂-C₂₂-Alkenyl oder -Alkinyl, Aryl, linearem oder verzweigtem C₁-C₂₂-Alkyl-Aryl, linearem oder verzweigtem C₂-C₂₂-Alkenyl-Aryl, linearem oder verzweigtem C₂-C₂₂-Alkinyl-Aryl und Heteroaryl;
R₉ ausgewählt ist aus der Gruppe, bestehend aus: Wasserstoff, Alkyl, Aryl, Benzyl, Amin, Alkylamin, Arylamin, Benzylamin und Aminoaryl;
R₁₀, R₁₁, R₁₂, R₁₃ und R₁₄ unabhängig voneinander ausgewählt aus sind der Gruppe, bestehend aus: Wasserstoff, C₁-C₁₈-Alkyl, linearem oder verzweigtem C₂-C₁₈-Alkenyl oder -Alkinyl und 1-(4-Aminocyclohexyl)methylen;
und Y, Z und W unabhängig voneinander ausgewählt sind aus einer ersten Gruppe, bestehend aus: Wasserstoff, C₁-C₁₈-Alkyl, linearem oder verzweigtem C₂-C₁₈-Alkenyl oder -Alkinyl, oder aus einer zweiten Gruppe, bestehend aus den folgenden Formeln: 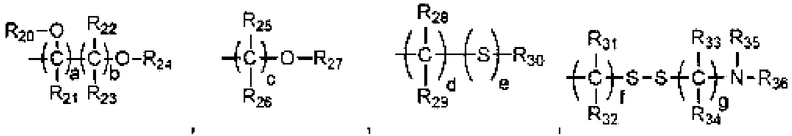
wobei R₂₀, R₂₁, R₂₂, R₂₃, R₂₄, R₂₅, R₂₆, R₂₇, R₂₈, R₂₉, R₃₀, R₃₁, R₃₂, R₃₃, R₃₄, R₃₅ und R₃₆ unabhängig voneinander ausgewählt sind aus der Gruppe, bestehend aus: Wasserstoff, C₁-C₁₈-Alkyl, linearem oder verzweigtem C₂-C₁₈-Alkenyl oder -Alkinyl, Aryl, linearem oder verzweigtem C₁-C₂₂-Alkyl-Aryl, linearem oder verzweigtem C₂-C₂₂-Alkenyl-Aryl, linearem oder verzweigtem C₂-C₂₂-Alkinyl-Aryl, Heteroaryl und Carboxyl; e eine ganze Zahl von 1 bis 4 ist und a, b, c, d, f und g unabhängig voneinander eine ganze Zahl von 1 bis 12 sind;
und wobei mindestens eines von Y, W und Z ausgewählt ist aus der genannten zweiten Gruppe.

8. Verbundwerkstoff gemäß Anspruch 7, wobei X dargestellt wird durch: 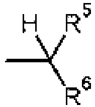 wobei die genannten R₅- und R₆-Gruppen unabhängig voneinander ausgewählt sind aus der Gruppe, bestehend aus: Wasserstoff, C₁-C₁₈-Alkyl und C₁-C₁₈-Alkyl-Hydroxyl.

9. Verbundwerkstoff gemäß einem beliebigen der Ansprüche 4 bis 8, wobei das genannte Addukt zwischen einem sp²-hybridisierten Kohlenstoffallotrop und einem Pyrrolderivat auf der Oberfläche einer Faser ist.

10. Verbundwerkstoff gemäß Anspruch 9, wobei die genannte Faser eine polare mineralische oder synthetische Faser ist.

11. Verbundwerkstoff gemäß Anspruch 10, wobei die genannte polare mineralische Faser ausgewählt ist aus der Gruppe, umfassend Silikate, wie zum Beispiel Sepiolith, Palygorskit, Attapulgit und Halloysit.

12. Verbundwerkstoff gemäß Anspruch 11, wobei die genannte polare mineralische Faser Sepiolith ist.

13. Verfahren zum Herstellen des Verbundwerkstoffs, wie in einem beliebigen oder mehreren der Ansprüche 1 bis 8 definiert, wobei das genannte Verfahren die folgenden Schritte umfasst:
(i) Herstellen einer wässrigen Suspension des Addukts, das optional auf der Oberfläche einer Faser ist;
(ii) Hinzufügen der wässrigen Suspension zu einer geeigneten Menge Zement;
(iii) Mischen; und
(iv) Verfestigen des Gemischs.

14. Verfahren zum Herstellen des Verbundwerkstoffs gemäß Anspruch 13, wobei die genannte Faser eine polare Faser ist.

## Revendications

1. Matériau composite comprenant :
a) un matériau cimentaire ; et
b) un adduit entre un allotrope de carbone hybridé sp² et un dérivé de pyrrole, dans lequel ledit dérivé de pyrrole est représenté par la formule (I) 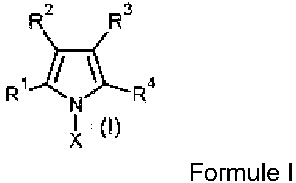
dans lequel R₁, R₂, R₃, et R₄ sont indépendamment choisis parmi le groupe constitué de : hydrogène, alkyle linéaire ou ramifié en C₁-C₂₂, alkényle ou alkynyle linéaire ou ramifié en C₂-C₂₂, aryle, alkyl-aryle linéaire ou ramifié en C₁-C₂₂, alkényl-aryle linéaire ou ramifié en C₂-C₂₂, alkynyl-aryle linéaire ou ramifié en C₂-C₂₂, et hétéroaryle ; et
X est choisi parmi le groupe constitué de : 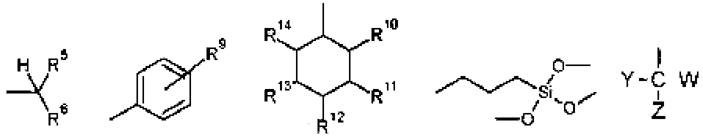 dans lequel :
R₅ et R₆ sont indépendamment choisis parmi le groupe constitué de : hydrogène, alkyle en C₁-C₁₈, alkényle ou alkynyle linéaire ou ramifié en C₂-C₁₈, alkyl-hydroxyle en C₁-C₁₈, aryle, alkyl-aryle linéaire ou ramifié en C₁-C₂₂, alkényl-aryle linéaire ou ramifié en C₂-C₂₂, alkynyl-aryle linéaire ou ramifié en C₂-C₂₂, et hétéroaryle ;
ou R₅ et R₆ sont indépendamment : 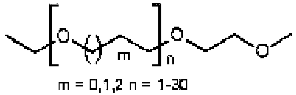 dans lequel si un seul entre R₅ et R₆ est 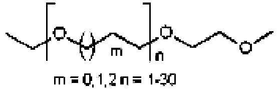 alors l'autre est choisi parmi un groupe constitué de : hydrogène, alkyle en C₁-C₁₈, et alkényle ou alkynyle linéaire ou ramifié en C₂-C₁₈ ;
ou R₅ et R₆ sont indépendamment choisis parmi le groupe constitué de : hydrogène et l'une des formules suivantes 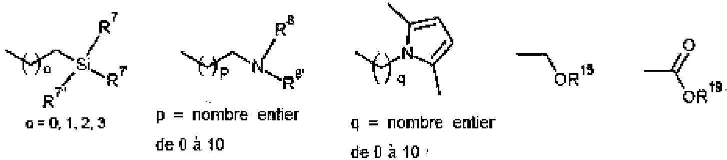 dans lequel
R₇, R₇, R_{7"}, R₈, R_{8'} sont indépendamment choisis parmi le groupe constitué de : alkyle en C₁-C₄, et oxy-alkyle en C₁-C₄ ;
R₁₅ est choisi parmi le groupe constitué de : hydrogène, alkyle linéaire ou ramifié en C₁-C₂₂, alkényle ou alkynyle linéaire ou ramifié en C₂-C₂₂, aryle, alkyl-aryle linéaire ou ramifié en C₁-C₂₂, alkényl-aryle linéaire ou ramifié en C₂-C₂₂, alkynyl-aryle linéaire ou ramifié en C₂-C₂₂, acyl-alkyle linéaire ou ramifié en C₂-C₂₂, acyl-alkényle ou acyl-alkynyle linéaire ou ramifié en C₃-C₂₂, acyl-aryle, acyl-alky-aryle avec acyl-alkyle linéaire ou ramifié en C₂-C₂₂, acyl-alkényl-aryle avec acyl-alkényle linéaire ou ramifié en C₃-C₂₂, acyl-alkynyl-aryle avec acyl-alkynyle linéaire ou ramifié en C₃-C₂₂, et hétéroaryle ; et
R₁₉ est choisi parmi le groupe constitué de : hydrogène, alkyle linéaire ou ramifié en C₁-C₂₂, alkényle ou alkynyle linéaire ou ramifié en C₂-C₂₂, aryle, alkyl-aryle linéaire ou ramifié en C₁-C₂₂, alkényl-aryle linéaire ou ramifié en C₂-C₂₂, alkynyl-aryle linéaire ou ramifié en C₂-C₂₂, et hétéroaryle ;
R₉ est choisi parmi le groupe constitué de : hydrogène, alkyle, aryle, benzyle, amine, alkyl-amine, aryl-amine, benzyl-amine et amino-aryle ;
R₁₀, R₁₁, R₁₂, R₁₃ et R₁₄ sont indépendamment choisis parmi le groupe constitué de : hydrogène, alkyle en C₁-C₁₈, alkényle ou alkynyle linéaire ou ramifié en C₂-C₁₈, et méthylène-1-(4-aminocyclohexyle) ;
et Y, Z et W sont indépendamment choisis parmi le groupe constitué de : hydrogène, alkyle en C₁-C₁₈, alkényle ou alkynyle linéaire ou ramifié en C₂-C₁₈, ou parmi un deuxième groupe constitué des formules suivantes : 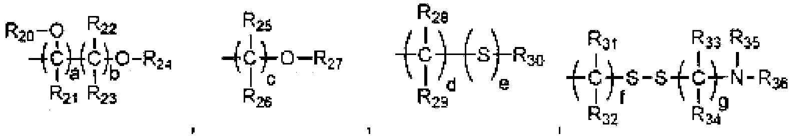
dans lequel R₂₀, R₂₁, R₂₂, R₂₃, R₂₄, R₂₅, R₂₆, R₂₇, R₂₈, R₂₉, R₃₀, R₃₁, R₃₂, R₃₃, R₃₄, R₃₅ et R₃₆ sont indépendamment choisis parmi le groupe constitué de : hydrogène, alkyle en C₁-C₁₈, alkényle ou alkynyle linéaire ou ramifié en C₂-C₁₈, aryle, alkyl-aryle linéaire ou ramifié en C₁-C₂₂, alkényl-aryle linéaire ou ramifié en C₂-C₂₂, alkynyl-aryle linéaire ou ramifié en C₂-C₂₂, hétéroaryle, et carboxyle ; e est un nombre entier de 1 à 4, et a, b, c, d, f, et g sont, indépendamment les uns des autres, un nombre entier de 1 à 12 ;
et dans lequel au moins un parmi Y, W, et Z est choisi dans ledit deuxième groupe.

2. Matériau composite selon la revendication 1, dans lequel ledit matériau cimentaire comprend du ciment portland ou est du ciment portland.

3. Matériau composite selon la revendication 2, dans lequel ledit ciment comprend en outre au moins un parmi de l'alumine, de l'oxyde de calcium, de l'oxyde de silicium, de l'oxyde de fer ou des mélanges de ceux-ci.

4. Matériau composite selon l'une quelconque des revendications 1 à 3, comprenant en outre des fibres de renforcement.

5. Matériau composite selon l'une quelconque des revendications 1 à 4, dans lequel la quantité d'adduit, par rapport au matériau cimentaire, exprimée en % en poids, est comprise entre 0,001 et 20.

6. Matériau composite selon l'une quelconque des revendications 1 à 5, dans lequel ledit allotrope de carbone hybridé sp² est choisi parmi le groupe constitué de graphène, graphite, nanographite, fullerène, nano-toroïdes, nano-cônes, nanorubans de graphène, nanoplaquettes de graphène, nanotubes de carbone à paroi simple ou multiple, et noir de carbone.

7. Matériau composite selon l'une quelconque des revendications 1 à 6, dans lequel, dans ledit dérivé de pyrrole de formule (I) 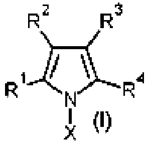
R₁, R₂, R₃, et R₄ sont indépendamment choisis parmi le groupe constitué de : hydrogène, alkyle linéaire ou ramifié en C₁-C₂₂, alkényle ou alkynyle linéaire ou ramifié en C₂-C₂₂, aryle, alkyl-aryle linéaire ou ramifié en C₁-C₂₂, alkényl-aryle linéaire ou ramifié en C₂-C₂₂, alkynyl-aryle linéaire ou ramifié en C₂-C₂₂, et hétéroaryle ;
et X est représenté par : 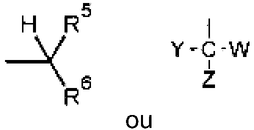 dans lequel :
R₅ et R₆ sont indépendamment choisis parmi le groupe constitué de : hydrogène, alkyle en C₁-C₁₈, alkényle ou alkynyle linéaire ou ramifié en C₂-C₁₈, alkyl-hydroxyle en C₁-C₁₈, aryle, alkyl-aryle linéaire ou ramifié en C₁-C₂₂, alkényl-aryle linéaire ou ramifié en C₂-C₂₂, alkynyl-aryle linéaire ou ramifié en C₂-C₂₂, et hétéroaryle ;
ou R₅ et R₆ sont indépendamment choisis parmi le groupe constitué de : hydrogène et l'une des formules suivantes 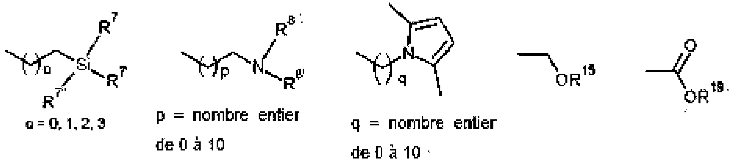 dans lequel
R₇, R_{7'}, R_{7"}, R₈ et R_{8'} sont indépendamment choisis parmi le groupe constitué de : alkyle en C₁-C₄, et oxy-alkyle en C₁-C₄ ;
R₁₅ est choisi parmi le groupe constitué de : hydrogène, alkyle linéaire ou ramifié en C₁-C₂₂, alkényle ou l'alkynyle linéaire ou ramifié en C₂-C₂₂, aryle, alkyl-aryle linéaire ou ramifié en C₁-C₂₂, alkényl-aryle linéaire ou ramifié en C₂-C₂₂, alkynyl-aryle linéaire ou ramifié en C₂-C₂₂, acyl-alkyle linéaire ou ramifié en C₂-C₂₂, acyl-alkényle ou acyl-alkynyle linéaire ou ramifié en C₃-C₂₂, acyl-aryle, acyl-alky-aryle avec acyl-alkyle linéaire ou ramifié en C₂-C₂₂, acyl-alkényl-aryle avec acyl-alkényle linéaire ou ramifié en C₃-C₂₂, acyl-alkynyl-aryle avec acyl-alkynyle linéaire ou ramifié en C₃-C₂₂, et hétéroaryle ; et
R₁₉ est choisi parmi le groupe constitué de : hydrogène, alkyle linéaire ou ramifié en C₁-C₂₂, alkényle ou alkynyle linéaire ou ramifié en C₂-C₂₂, aryle, alkyl-aryle linéaire ou ramifié en C₁-C₂₂, alkényl-aryle linéaire ou ramifié en C₂-C₂₂, alkynyl-aryle linéaire ou ramifié en C₂-C₂₂, et hétéroaryle ;
R₉ est choisi parmi le groupe constitué de : hydrogène, alkyle, aryle, benzyle, amine, alkyl-amine, aryl-amine, benzyl-amine et amino-aryle ;
R₁₀, R₁₁, R₁₂, R₁₃ et R₁₄ sont indépendamment choisis parmi le groupe constitué de : hydrogène, alkyle en C₁-C₁₈, alkényle ou alkynyle linéaire ou ramifié en C₂-C₁₈, et méthylène-1-(4-aminocyclohexyle) ;
et Y, Z et W sont indépendamment choisis parmi le groupe constitué de : hydrogène, alkyle en C₁-C₁₈, alkényle ou alkynyle linéaire ou ramifié en C₂-C₁₈, ou parmi un deuxième groupe constitué des formules suivantes : 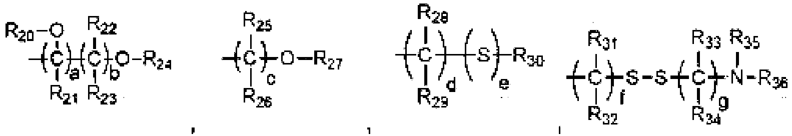 dans lequel
R₂₀, R₂₁, R₂₂, R₂₃, R₂₄, R₂₅, R₂₆, R₂₇, R₂₈, R₂₉, R₃₀, R₃₁, R₃₂, R₃₃, R₃₄, R₃₅ et R₃₆ sont indépendamment choisis parmi le groupe constitué de : hydrogène, alkyle en C₁-C₁₈, alkényle ou alkynyle linéaire ou ramifié en C₂-C₁₈, aryle, alkyl-aryle linéaire ou ramifié en C₁-C₂₂, alkényl-aryle linéaire ou ramifié en C₂-C₂₂, alkynyl-aryle linéaire ou ramifié en C₂-C₂₂, hétéroaryle, et carboxyle ; e est un nombre entier de 1 à 4, et a, b, c, d, f, et g sont, indépendamment les uns des autres, un nombre entier de 1 à 12 ;
et dans lequel au moins un parmi Y, W, et Z est choisi dans ledit deuxième groupe.

8. Matériau composite selon la revendication 7, dans lequel X est représenté par : 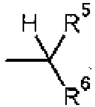 dans lequel lesdits groupes R₅ et R₆ sont indépendamment choisis parmi le groupe constitué de : hydrogène, alkyle en C₁-C₁₈, et alkyl-hydroxyle en C₁-C₁₈.

9. Matériau composite selon l'une quelconque des revendications 4 à 8, dans lequel ledit adduit entre un allotrope de carbone hybridé sp² et un dérivé de pyrrole se trouve à la surface d'une fibre.

10. Matériau composite selon la revendication 9, dans lequel ladite fibre est une fibre minérale polaire ou synthétique.

11. Matériau composite selon la revendication 10, dans lequel ladite fibre minérale polaire est choisie parmi le groupe comprenant les silicates, tels que la sépiolite, la palygorskite, l'attapulgite et l'halloysite.

12. Matériau composite selon la revendication 11, dans lequel ladite fibre minérale polaire est la sépiolite.

13. Procédé de préparation du matériau composite tel que défini dans l'une quelconque ou plusieurs des revendications 1 à 8, ledit procédé comprenant les étapes suivantes :
(i) préparation d'une suspension aqueuse de l'adduit, étant optionnellement à la surface d'une fibre ;
(ii) ajout de la suspension aqueuse à une quantité de ciment appropriée ;
(iii) mélange ; et
(iv) solidification du mélange.

14. Procédé de préparation du matériau composite selon la revendication 13, dans lequel ladite fibre est une fibre polaire.
